(19) Europäisches Patentamt
European Patent Office
Office européen des brevets

(11) EP 2 223 986 A1

(12) EUROPEAN PATENT APPLICATION

(43) Date of publication:
**01.09.2010 Bulletin 2010/35**

(51) Int Cl.:
***C09K 11/06*** *(2006.01)*

(21) Application number: **09152301.9**

(22) Date of filing: **06.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Solvay S.A.**
**1050 Bruxelles (BE)**

(72) Inventors:
- **Nazeeruddin, Mohammad Khaja**
  **1024 ECUBLENS (CH)**
- **Baranoff, Etienne David**
  **1020 RENENS VD (CH)**
- **Graetzel, Michaël**
  **1025 SAINT SULPICE (CH)**

(74) Representative: **Jacques, Philippe et al**
**Solvay S.A.**
**Département de la Propriété Industrielle**
**Rue de Ransbeek, 310**
**1120 Bruxelles (BE)**

(54) **Complex salts for light emitting devices**

(57) White light emitting material comprising a complex salt of the general formula $[M_1^{m+}]_x [M_2^{n-}]_y$ wherein:
• xm=yn,
• $[M_1^{m+}]$ and $[M_2^{n-}]$ are ionic light emitting moieties which have complementary emission spectra, one emitting in the blue region of the visible spectra and the other, in the red region of the visible spectra, and
wherein at least one of $M_1$ and $M_2$ is a metallic complex.



Printed by Jouve, 75001 PARIS (FR)

## Description

### Technical field of the invention

The present invention relates to metal complex salts and their use as emitting materials in light emitting devices. In particular it relates to their use as white emitters in organic light emitting devices (OLED).

### Background of the invention

White emitting OLED can be obtained via different technologies. For instance, they can be obtained by using multi-layers architectures wherein each layer has a different emission spectrum and wherein the emission spectra of the multiple layers are complementary and cover the entire visible spectra, thereby obtaining white emission. Another approach is the use of a single molecule having a broad emission spectrum. Yet another approach is the use of multiple emitters emitting at different wavelengths in a single layer. Those approaches up to now involved neutral molecules as they are suitable for vacuum prepared small molecule-OLED's. The most frequently used approach for generating white light emission involves the preparation of devices comprising two or three emitting layers. This makes the preparation of white light emitting devices (WOLED) an expensive process unable to compete with actual lighting technologies.

WO 2006/024997 discloses a tris-nuclear white emitter molecule comprising two blue emitting iridium center coordinated through an organic link to a red emitting europium complex wherein partial energy transfer from high energy emitting centers to the low energy emitting center led to emission of almost white light. Such partial energy transfer between covalently bonded emitting centers can be controlled by carefully engineering the linker between the two emitting centers via tuning of the length of the linking group. This requires long and tedious organic chemistry.

### Summary of the invention

It is an object of the present invention to provide emitters, especially white emitters, which are easy to prepare and wherein the extent of energy transfer is easy to control.

In a first aspect, the present invention relates to a light emitting material comprising a complex salt consisting of a group of one or more cationic light emitting moieties compensating the charge of a group of one or more anionic light emitting moieties, wherein at least one of said moieties is a metallic complex. In embodiments, the moieties have complementary emission spectra so that the emitting material can act as a white emitting material. Each light emitting moiety can be a phosphorescent. In particular, embodiments of the first aspect relates to white light emitting material comprising a complex salt of the general formula $[M_1^{m+}]_x [M_2^{n-}]_y$ wherein:

- $x m = y n$,
- $[M_1^{m+}]$ and $[M_2^{n-}]$ are ionic light emitting moieties which have complementary emission spectra, one emitting in the blue region of the visible spectra and the other, in the red region of the visible spectra, and

wherein at least one of $M_1$ and $M_2$ is a metallic complex.

In a second aspect, the present invention relates to a process for the preparation of emitting material and in particular a complex salt according to the first aspect of the present invention.

In a third aspect, the present invention relates to a light emitting device comprising an emitting layer, said emitting layer comprising or consisting of a light emitting material according to the first aspect of the present invention. In a fourth aspect, the present invention relates to the use of white light emitting material according to the first aspect of the present invention in an emitting layer of a light emitting device.

An advantage of embodiments of the present invention is that white light emission can be obtained via a single layer of material. Single emitting layer devices are easier and cheaper to manufacture.

Another advantage of embodiments of the present invention is that they provide a versatile approach toward fine-tuned emission by permitting the separate optimization of each emitter of the metal complex salt.

Yet another advantage of embodiments of the present invention is that a minimum number of synthesis steps is required to prepare the emitting material while the prior art requires the synthetic incorporation of a linker.

A further advantage of embodiments of the present invention is that the extent of energy transfer between the energy donor and the energy acceptor part of an emitter according to embodiments of the present invention can be easily controlled by varying the polarity (local and/or global polarity) of the media with which the emitter is in contact and/or by varying the concentration of polarizing dopant therein. In the prior art, varying the extent of the energy transfer implied varying the length of the linker via a new synthesis.

Particular and preferred aspects of the invention are set out in the accompanying independent and dependent claims. Features from the dependent claims may be combined with features of the independent claims and with features

of other dependent claims as appropriate and not merely as explicitly set out in the claims.

Although there has been constant improvement, change and evolution of devices in this field, the present concepts are believed to represent substantial novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

## Brief description of the drawings

FIG. 1 is the absorption spectrum in dimethyl sulfoxide (DMSO) of a blue emitting anionic metal complex (EB123) (dotted line), of a red emitting cationic metal complex (EBPPbp) (squares), of a complex salt according to an embodiment of the present invention (EB124) (circles), and of the mathematical sum of the absorption spectrum of EB123 and the absorption spectrum of EBPPbp (full line).

FIG. 2 is the absorption (+), excitation (o) and emission (full line) spectra in DMSO of a blue emitting anionic metal complex (EB123).

FIG. 3 is the absorption (+), excitation (o) and emission (full line) spectra in DMSO of a red emitting anionic metal complex (EBPPbp).

FIG. 4 is the absorption (+), excitation (o) and emission (full line) spectra in DMSO of a complex salt according to an embodiment of the present invention (EB124).

## Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description

are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

As used herein and unless provided otherwise, the term *"hole transporting polymer"* or *"hole conducting polymer"* relates to a semi-conducting polymer whose ability to transport holes is higher than its ability to transport electrons.

As used herein and unless provided otherwise, the term *"electron transporting polymer"* or *"electron conducting polymer"* relates to a semi-conducting polymer whose ability to transport electrons is higher than its ability to transport holes.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

The inventors realized that in order to obtain a single layer emitting device, a simple mixture of two differently charged ionic complexes having two non-emitting counter ions would present various inconveniences if used as an emitting material. A first drawback of such a mixture would be that salts from the counter ions may crystallize. If for example a cationic luminescent complex $M_1$ having counter-anions $X_1$,(i.e. an ion-pair $[M_1^+][X_1^-]$), and an anionic luminescent complex $M_2$ having counter-cations $X_2$, (i.e. an ion pair $[M_2^-]$ $[X_2^+]$), are mixed together, the salt $[X_1^-]$ $[X_2^+]$ could easily crystallize on the long term as those counter ions are usually made of very small molecules ($PF_6^-$,...) or atoms (C1$^-$, $Na^+$...) which can strongly bind. Also, if for example an ion-pair $[M_1^+][X_1^-]$, and an ion pair $[M_2^+][X_2^-]$, are mixed together, both emitting complexes will end up on the same side of the device, increasing quenching possibilities.

Additionally, preparation of complexes having counter ions, which do not crystallize, like for example ionic liquid derivative counter ions, may be difficult and expensive as an ion exchange step would be required. This step would involve a saturated solution of the sought after counter ion, and precipitation of the expected complex.

To overcome those synthetic steps, it was surprisingly found that electrostatic supramolecular bonds and more particularly ionic supramolecular bonds can be used to bring together two or more light emitting moieties.

In a first aspect, the present invention relates to a light emitting material comprising a complex salt consisting of a group of one or more cationic light emitting moieties compensating the charge of a group of one or more anionic light emitting moieties, wherein at least one of said moieties is a metallic complex. In embodiments, the moieties have complementary emission spectra so that the emitting material can act as a white emitting material. Each light emitting moiety can be a phosphorescent moiety or a fluorescent moiety, preferably it is a phosphorescent moiety.

Embodiments of the first aspect of the present invention relates to a light emitting material comprising a complex salt of general formula $[M_1^{m+}]_x$ $[M_2^{n-}]_y$

wherein:

1. $M_1$ is a cationic light emitting moiety,
2. $M_2$ is an anionic light emitting moiety,
3. x m = y n, and

wherein at least one of $M_1$ and $M_2$ is a metallic complex.

In embodiments, $[M_1^{m+}]_x$ and $[M_2^{n-}]_y$ have complementary emission spectra so that the emitting material is a white light emitting material.

In an embodiment, the complex salts are **characterised in that** one of $[M_1^{m+}]_x$ and $[M_2^{n-}]_y$ emits in the blue region of the visible spectrum (from deep blue to sky-blue and greenish blue, e.g. has its emission spectra with a wavelength of maximum emission in the range 390-550 nm, preferably 390 - 520 nm) and the other emits in the red region of the visible spectrum (from yellow-orange to red, e.g. has its emission spectra with a wavelength of maximum emission in the range 550-740 nm, preferably 580 - 740 nm). In other words, embodiments of the present invention relate to white light emitting material according to any embodiments above wherein one of $[M_1^{m+}]_x$ and $[M_2^{n-}]_y$ has its emission spectra with a wavelength of maximum emission in the range 550 - 740 nm and the other has its emission spectra with a wavelength of maximum emission in the range 390 - 550 nm. Preferably, the distance between the moieties (e.g. between $[M_1^{m+}]_x$ and $[M_2^{n-}]_y$ in the case of an ion pair) is adapted and/or the moieties are chosen (e.g. $[M_1^{m+}]_x$ and $[M_2^{n-}]_y$ are chosen) so that said metal salt is capable of emitting light having CIE 1931 coordinates (x, y) in the range

from (0.200, 0.200) to (0.550, 0.500), preferably from (0.260, 0.280) to (0.460, 0.500), more preferably from (0.270, 0.290) to (0.400, 0.400). In other words, embodiments of the present invention relate to white light emitting material according to any embodiments above wherein the complex salt is capable of emitting light having CIE 1931 coordinates (x, y) in the range from (0.200, 0.200) to (0.550, 0.500). This is advantageous as light having such CIE 1931 coordinates is acceptable white light. Adaptation of the distance between the moieties (e.g. $[M_1^{m+}]_x$ and $[M_2^{n-}]_y$) may be performed by having the complex salt comprised in a matrix (preferably dispersed in a matrix) wherein the polarity (e.g. global and/or local polarity) of the matrix surrounding the metal complex salts is adapted to provide a distance between the light emitting moieties such that emission of white light can occur. When a matrix is present, the complex salt, that is the quest, may be present in an amount of 0.05% or more, preferably 0.10% or more, particularly preferably 0.15% or more and especially preferably 0.20% or more. The guest may be present in an amount of 20% or less, preferably 15% or less, particularly preferably 10% or less and especially preferably 5% or less wherein any of those higher limits can be combined with any of the lower limits above. Embodiments of the present invention relate to light emitting material comprising a complex salt as defined in any embodiments above and a matrix, wherein the polarity of said matrix is such as to provide a distance between the light emitting moieties such that emission of white light can occur. The matrix can be a liquid, gel or solid polar, non-ionic medium. Preferably the matrix is a solid medium. The main component of the matrix is preferably non-ionic but the non-ionic matrix can be doped with polar species such as ionic species. In embodiments, the non-ionic matrix can be aprotic. The matrix preferably comprises a polymer as its main or only component. Optionally, the optical characteristics of the matrix (e.g. its absorption properties) can be used to adapt (e.g. to correct) the emission spectrum of the light emitting complex salt. The matrix is preferably transparent to visible light. A good way to provide a matrix suitable for providing enough distance between the moieties is to select a polar matrix. The matrix has preferably a polarity at least equal to the polarity of poly(vinylpyrrolidone) (PVP), i.e. less than 3.0.

Suitable polar matrixes further behave as hole transport and / or electron transport organic semi-conductors, comprising for instance poly(vinylcarbazole) (PVK) and/or polymeric or non-polymeric oxadiazoles, amongst others.

The dielectric constant (or relative static permittivity) is a measure of the macroscopic polarity of the matrix. If the dielectric constant of the matrix is less than the one of PVP (e.g. less than 3.0), it is preferable to have one or more secondary components (or "dopant") in the matrix. Those dopants are polar molecules. Those polar molecules are preferably able to loose or break the electrostatic (ionic) bond(s) linking the ionic moieties in the complex salt. The dopant (s) are preferably ionic salts. Ionic salts help separating the emitting moieties. Examples of dopants are salts of organic cations in combination with either organic or inorganic anions. When in liquid form, they are referred to ionic liquids or molten salts. Ionic liquids comprise a molten salt, which is liquid at room temperature and also encompasses a so-called "ambient temperature molten salt" having a melting point lower that 150° C, preferably lower than 80° C. and more preferably lower than 30° C.

Ionic liquids are compounds which consist of a cation and an anion as in a regular salt. The distinguishing characteristic is the low temperature melting point of the compound. The melting point may be below room temperature or at a relative low elevated temperature (for example 150 °C) making them compatible with polymeric films, while in their liquid state. Examples of cations for the ionic liquid are: mono, di and tri-substituted imidazoliums, pyridiniums, pyridazinium, pyrimidinium, pyrrolidiniums, pyrazinium, pyrazolium, thiazolium, oxazolium, triazolium, phosphoniums, ammoniums, guanidiniums, and isouroniums. Examples of anions for the ionic liquid are: halogenides, sulfates, sulfonates (e.g. trifluoromethylsulfonate ("triflate," $CF_3SO_3^-$)), amides, imides (e.g. bis(trifluoromethylsulfonyl)imide ($N(CF_3SO_2)_2^-$), bis(perfluoroethylsulfonyl)imide ($(C_2F_5SO_2)_2N^-$)), methides (e.g. tris(trifluoromethylsulfonyl)methide ($(CF_3SO_2)_3C^-$)), borates (e.g. tetrafluoroborate ($BF_4^-$)), phosphates (e.g. hexafluorophosphate ($PF_6^-$)), antimonates (e.g. hexafluoroantimonate ($SbF_6^-$)), arsenates (e.g. hexafluoroarsenate ($AsF_6^-$)), cobalt tetracarbonyl, trifluoroacetate, and decanoate.

When present, the dopant may be present in an amount of 0.05% or more, 0.10% or more, 0.15% or more or 0.20% or more. The dopant may be present in an amount of 20% or less, 15% or less, 10% or less or 5% or less wherein any of those higher limits can be combined with any of the lower limits above. When a guest is present, the molar ratio of the complex salt to the polar dopant in the matrix is can for instance be 1.5 or less, 1.3 or less, 1.2 or less 1.1 or less, 1.05 or less, 0.5 or more, 0.7 or more, 0.8 or more, 0.9 or more, 0.95 or more, wherein any lower limit can be combined with any higher limit. If the main component of the matrix is less polar than PVP, polar (e.g. ionic) dopant molecules can nevertheless be added to further separate the moieties. The moieties composing the metal salts of the present invention can usually interact by energy transfer depending on the distance separating them. For instance, in the case of an ion pair comprising a blue emitting cation and a red emitting anion, the blue emitting cation is likely to transfer all or part of its energy to the red emitting anion (this will depend on the extend of the overlap between the emission spectrum of the blue emitter and the absorption spectrum of the red emitter as well as on the distance between both emitters and their average relative orientation) . If the energy transfer is too large, the ion pair will emit red light upon excitation of the blue emitter. In order to have the ion pair emitting what can be considered as being white light (e.g. light having CIE 1931 coordinates (x, y) in the range from (0.200, 0.200), preferably (0.260, 0.280) to (0.550, 0.500) preferably (0.460, 0.500)), it is usually required to have a sufficient distance between the emitting moieties. Higher distance will decrease the extent of the energy transfer between the emitting moieties. White light emission will be obtained when the distance between

emitting moieties having complementary emission spectra is such that energy transfer occurs to such an extent that both moieties emit light with relative intensity such that a human eye perceive the light mixture as being white light. The case of an ion pair as described in the example above can be extrapolated to cases where more than two emitting species are involved.

For the performance of the present invention, it is advantageous to choose the emitting moieties composing the complex salt in such a way that their emission spectra are complementary, i.e. that their emission spectra cover a sufficiently large part of the visible spectrum to result in white light emission when each emitting moieties emit light with an adequate intensity. The sufficiency of these intensities can be met by adapting the distance between the emitting moieties, this for instance by adapting the polarity of a surrounding matrix as explained above. The right distance between the moieties will depend on the nature of the moieties chosen. This distance can be determined by the person skilled in the art using the guidance provided in the present application. For white emission, although an ideal distance range between the emitting moieties exists for each complex salt, too high a distance usually leads to less deviation from white light and too less distance usually leads to more deviation from white light (light is easily strongly red shifted when the distance between the moieties is too small).

Preferably, both $M_1$ and $M_2$ are metallic complexes. The main advantage of that embodiment is to enable phosphorescence from both parts of the complex salt. Purely organic molecules (to be opposed to metallic complexes in this case) are usually fluorescent. This could lead to loss of efficiency if recombination of carriers occurs on the organic molecule and no energy transfer happens. Another advantage is the simplicity to obtain charged emitter by using metal complexes. Finally, the charges in the complexes are usually "inside", that is the charged metallic ion is already surrounded by ligands, in particular in the case of octahedral complexes, whereas in organic molecules, charges are usually at the periphery as they come from grafting of charged substituent. As the electrostatic attraction is highly dependant on the distance between charges, stronger interaction is expected when organic molecule is used, requiring more polar polymer or stronger electric field to be separated for white light emission. Examples of suitable metallic $M_1$ or $M_2$ are light emitting charged complexes of iridium, ruthenium, rhodium, rhenium, platinum, gold, osmium, zinc, cadmium, mercury, copper or silver. Preferred metallic $M_1$ or $M_2$ are light emitting charged complexes of iridium, ruthenium, rhodium, rhenium, platinum, gold, osmium. Examples of metallic emitting cations are presented here below:

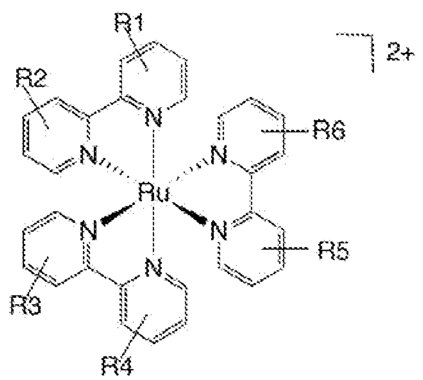

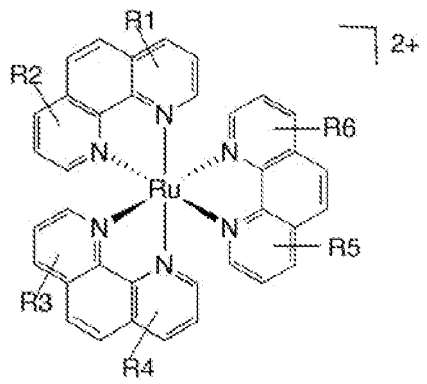

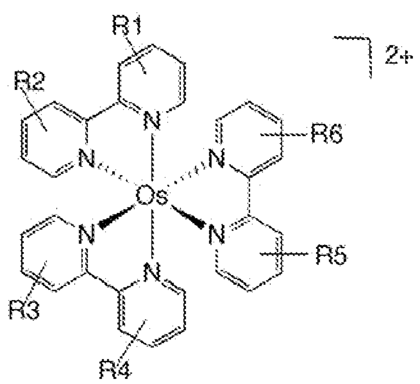

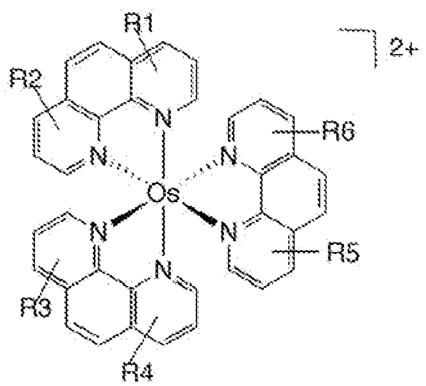

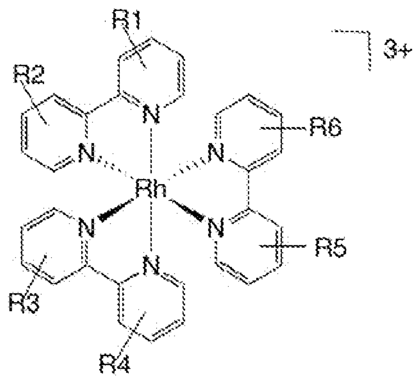

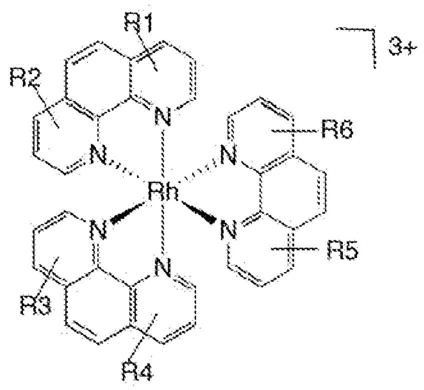

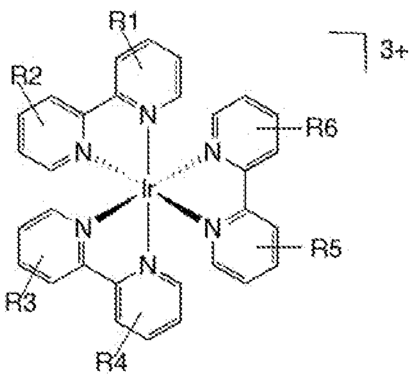

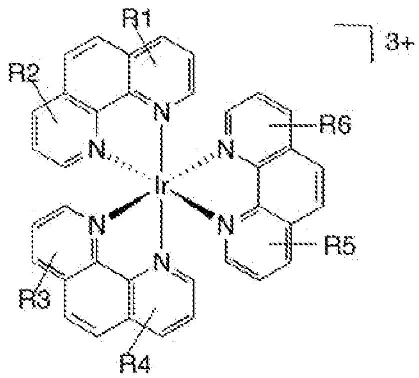

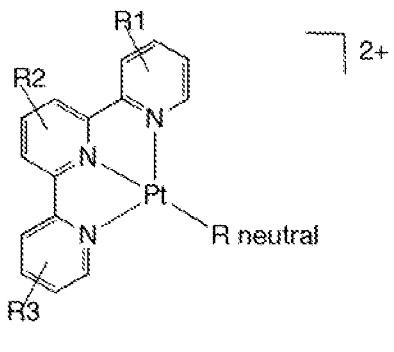

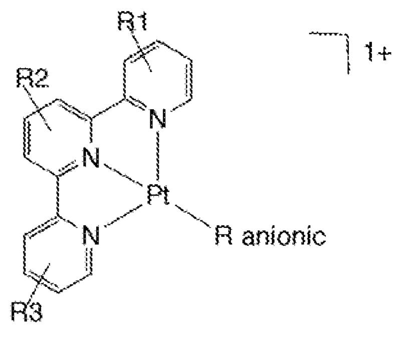

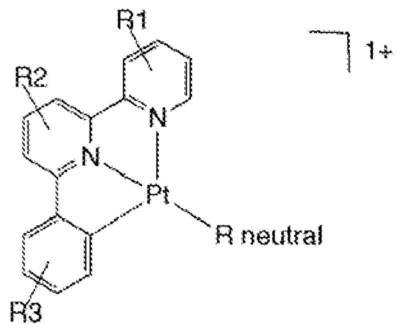

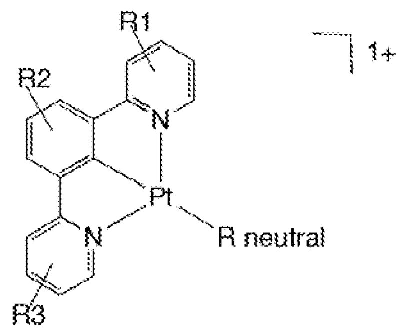

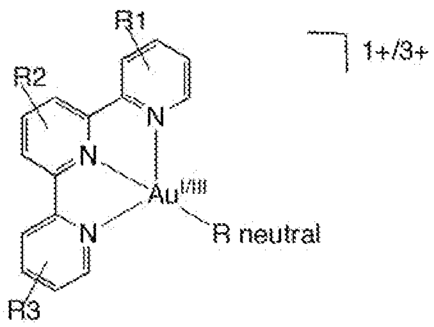

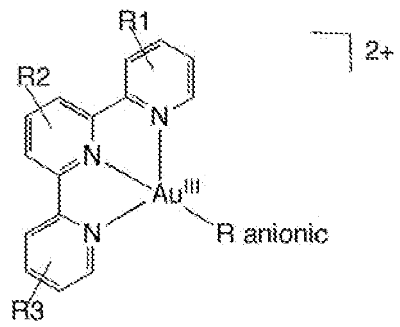

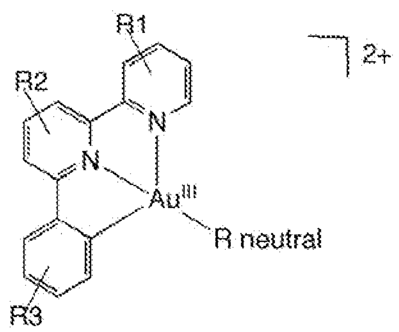

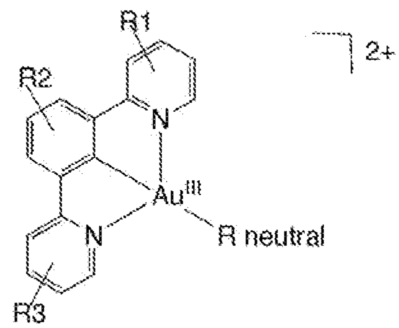

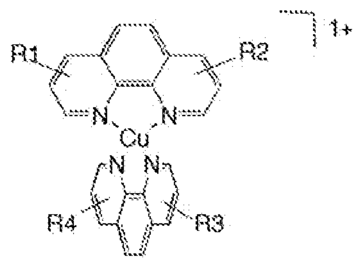

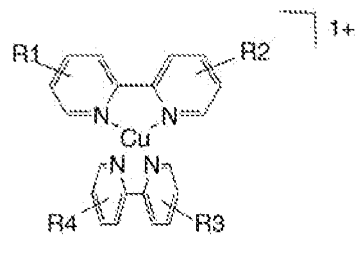

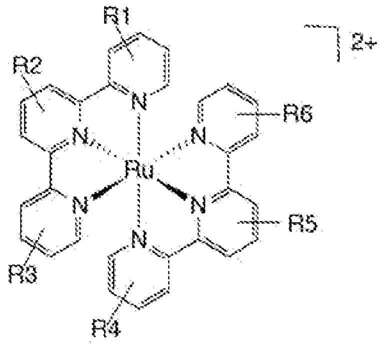
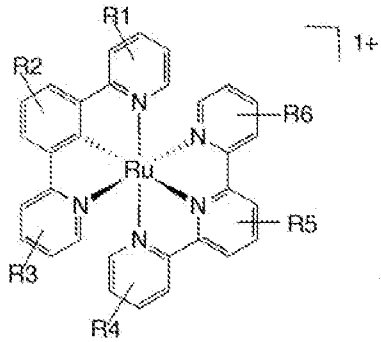
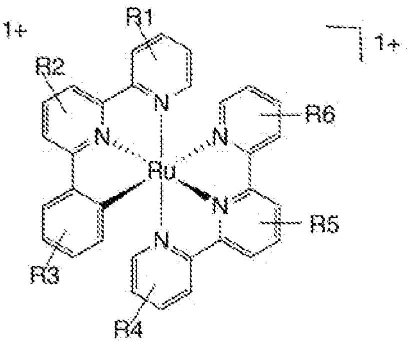

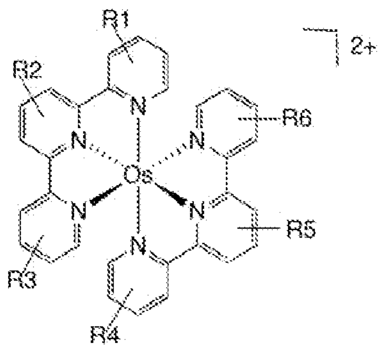
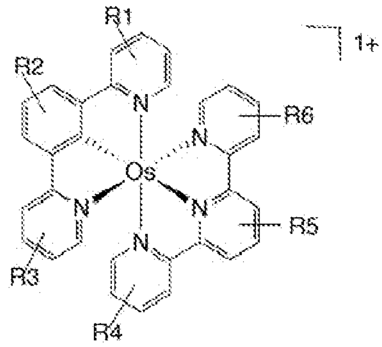
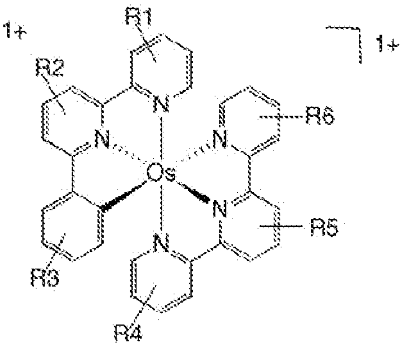

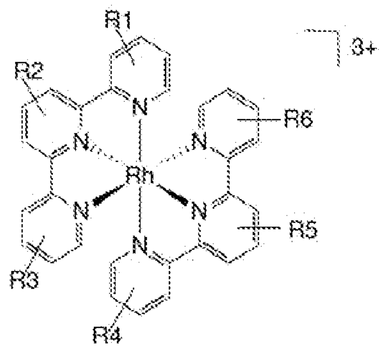
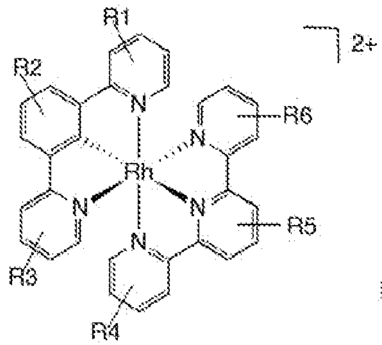
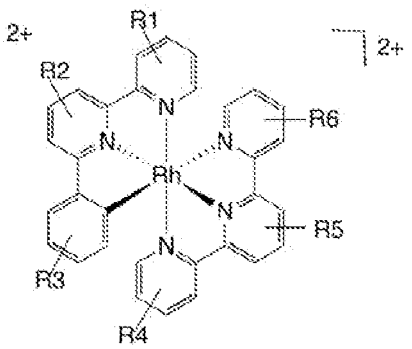

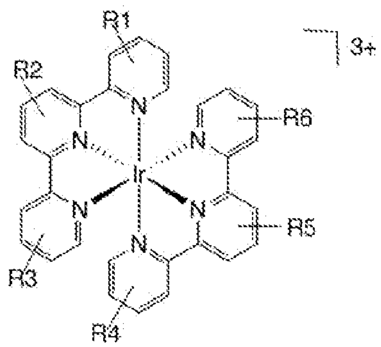
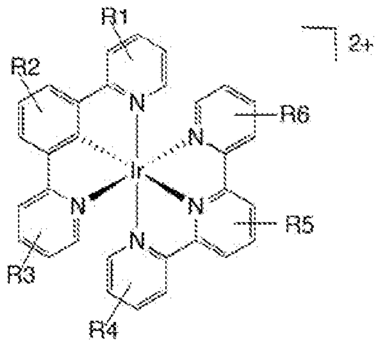
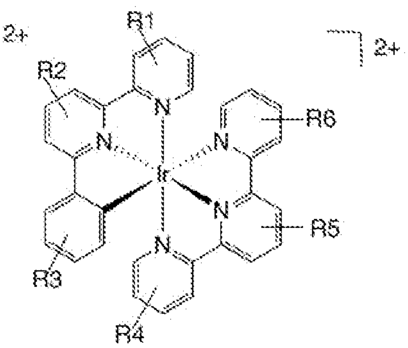

wherein R1-R6 are substituents as defined in any of $R^1$-$R^{42}$ and $R^{63}$-$R^{66}$ below.

Preferably a complex salt as defined above is used, wherein :

1) $M_1$ denotes $D(X)_2(Y)_2$ or $D(X)_2Z$, wherein
D represents a metal ion selected from the group consisting of Ir, Ru, Os and Rh;
each X represents independently of one another a compound of general formula

I or Ia,

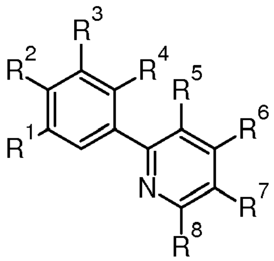

I

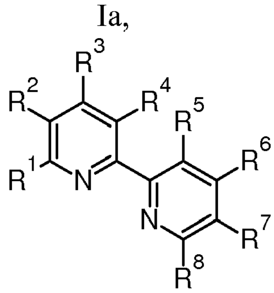

Ia,

whereby compounds of general formula I coordinate to D via one $sp^2$ hybridized carbon atom and one $sp^2$ hybridized nitrogen atom and compounds of general formula Ia coordinate to D via two $sp^2$ hybridized nitrogen atoms;
wherein $R^1$ denotes a moiety selected from the group consisting of F, Cl, -O-alkyl, -C(=O)-O-alkyl, -C(=O)-$CF_3$, -$CF_3$, -CN, alkyl and H;
or $R^1$ and $R^2$ together represent -CH=CH-CH=CH-;
$R^2$ denotes a moiety selected from the group consisting of -O-alkyl, F, Cl, Br, - C(=O)-O-alkyl, -C(=O)-$CF_3$, -$CF_3$, -CN, alkyl and H;
or $R^2$ and $R^3$ together represent -CH=CH-CH=CH-;
$R^3$ denotes a moiety selected from the group consisting of -C(=O)-O-alkyl, H, - C(=O)-$CF_3$, -$CF_3$, -CN, alkyl, -O-alkyl, -N(alkyl)$_2$ and -N$^+$(alkyl)$_3$;
or $R^3$ and $R^4$ together represent -CH=CH-CH=CH-;
$R^4$ denotes a moiety selected from the group consisting of -C(=O)-O-alkyl, - C(=O)-$CF_3$, -O-alkyl, alkyl, H, F, Cl and Br;
or $R^4$ and $R^5$ together represent -CH=CH-;
$R^5$ denotes a moiety selected from the group consisting of -C(=O)-O-alkyl, - C(=O)-$CF_3$, -O-alkyl, alkyl, H, F, Cl and Br;
or $R^5$ and $R^6$ together represent -CH=CH-CH=CH- or -$CH_2$-CH=CH-$CH_2$-;
$R^6$ denotes a moiety selected from the group consisting of H, alkyl, -O-alkyl, phenyl, -C(=O)-O-alkyl, -$CF_3$, -C (=O)-$CF_3$, -CN, -N(alkyl)$_2$ and -N$^+$(alkyl)$_3$;
or $R^6$ and $R^7$ together represent -CH=CH-CH=CH- or -$CH_2$-CH=CH-$CH_2$-;
$R^7$ denotes a moiety selected from the group consisting of H, F, Cl, Br, -CN, - $CF_3$, -O-alkyl, alkyl, -C(=O)-O-alkyl and -C(=O)-$CF_3$;
or $R^7$ and $R^8$ together represent -$CH_3$=CH-CH=CH-;
and $R^8$ denotes a moiety selected from the group consisting of -CN, -$CF_3$, - C(=O)-$CF_3$, -C(=O)-O-alkyl, O-alkyl, alkyl, H, F, Cl and Br;
each Y represents independently of one another a moiety selected from the group consisting of F, Cl, Br, $CH_3$, -O-alkyl, OH, -CN, -OCN and -SCN;
and Z represents a compound of general formula II or IIa,

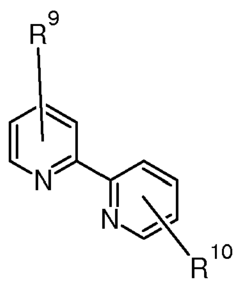

II

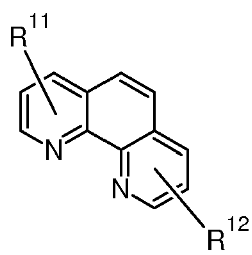

IIa,

wherein
$R^9$, $R^{10}$, $R^{11}$ and $R^{12}$, independently of one another, each represent a moiety selected from the group consisting of -C(=O)-O-alkyl, alkyl, phenyl, H, $-N(alkyl)_2$, F, Cl, Br, -O-alkyl and $-CF_3$;
and whereby compounds of general formula II and IIa coordinate to D via two $sp^2$ hybridized nitrogen atoms; or
2) $M_1$ denotes FTL, wherein
F represents a metal ion selected from the group consisting of Pt and Au;
T represents a compound of general formula III, IIIa or IIIb

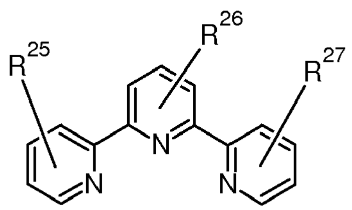

III

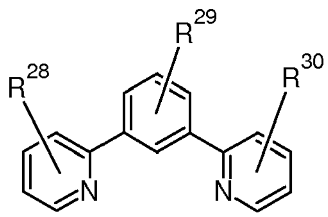

IIIa

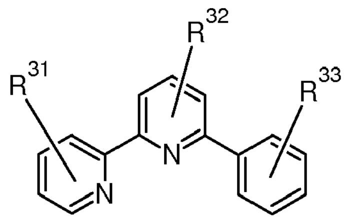

IIIb,

whereby compounds of general formula III and IIIb coordinate to F via one $sp^2$ hybridized carbon atom and two $sp^2$ hybridized nitrogen atoms and compounds of general formula III coordinate to F via three $sp^2$ hybridized nitrogen atoms;
wherein $R^{25}$, $R^{26}$, $R^{27}$, $R^{28}$, $R^{29}$, $R^{30}$, $R^{31}$, $R^{32}$ and $R^{33}$, independently of one another, each represent a moiety selected from the group consisting of F, Cl, -CN, - C(=O)-O-alkyl, alkyl, -O-alkyl, phenyl, H, $-N(alkyl)_2$ and $-CF_3$;
and L represents a ligand selected from the group consisting of CO, $-N(alkyl)_2$, - $NH_2(alkyl)$, F, Cl, Br, I, CN, OCN, -O-alkyl, -OH and SCN; or
3) $M_1$ denotes $G(U)_2$, wherein
G represents a metal ion selected from the group consisting of Ir, Ru, Os and Rh;
each U represents independently of one another a compound of general formula IV, IVa or IVb,

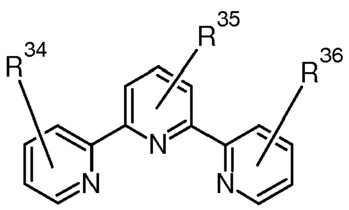

IV

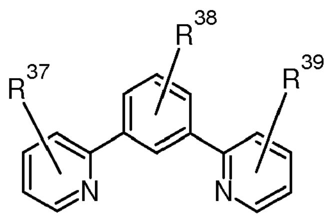

IVa

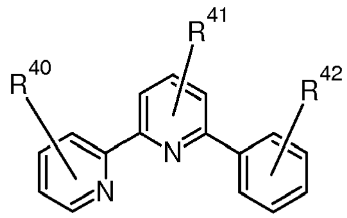

IVb,

whereby compounds of general formula IVa and IVb coordinate to G via one $sp^2$ hybridized carbon atom and two $sp^2$ hybridized nitrogen atoms and compounds of general formula IV coordinate to G via three $sp^2$ hybridized nitrogen atoms;
wherein $R^{34}$, $R^{35}$, $R^{36}$, $R^{37}$, $R^{38}$, $R^{39}$, $R^{40}$, $R^{41}$ and $R^{42}$, independently of one another, each represent -O-alkyl, F, Cl, -CN, -C(=O)-O-alkyl, alkyl, phenyl, H, - $N(alkyl)_2$ and $-CF_3$; or
4) $M_1$ denotes a compound of general formula $CuP_2$,
wherein each P independently of one another represents a compound of general
formula IX or X,

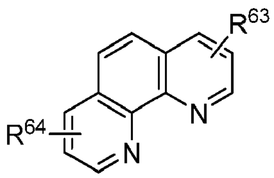

IX

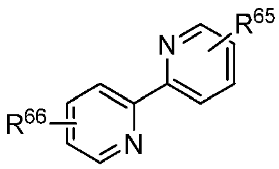

X,

wherein $R^{63}$, $R^{64}$, $R^{65}$ and $R^{66}$, independently of one another each denote a moiety selected from the group consisting of F, Cl, -CN, -C(=O)-O-alkyl, alkyl, -O-alkyl, phenyl, H, $-N(alkyl)_2$ and $-CF_3$;
whereby compounds of general formula IX and X coordinate to Cu via two $sp^2$ hybridized nitrogen atoms;
and/or
5) $M_2$ denotes $E(W)_2S$, wherein
E represents a metal ion selected from the group consisting of Ir, Ru, Os and Rh;
each W represents independently of one another a compound of general formula I' or Ia',

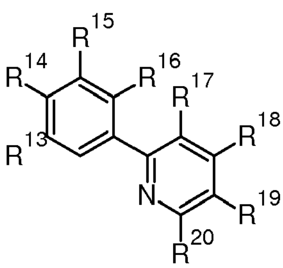

I'

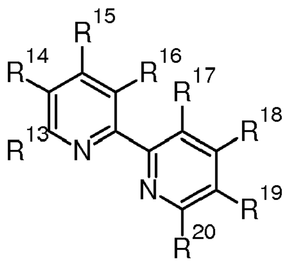

Ia',

whereby compounds of general formula I' coordinate to E via one $sp^2$ hybridized carbon atom and one $sp^2$ hybridized nitrogen atom and compounds of general formula Ia' coordinate to E via two $sp^2$ hybridized nitrogen atoms;

wherein $R^{13}$ denotes a moiety selected from the group consisting of F, Cl, -O-alkyl, -C(=O)-O-alkyl, $-C(=O)-CF_3$, $-CF_3$, -CN, alkyl and H;
or $R^{13}$ and $R^{14}$ together represent -CH=CH-CH=CH-;
$R^{14}$ denotes a moiety selected from the group consisting of -C(=O)-O-alkyl, - $C(=O)-CF_3$, $-CF_3$, -CN, -O-alkyl, F, Cl, Br and H;
or $R^{14}$ and $R^{15}$ together represent -CH=CH-CH=CH-;
$R^{15}$ denotes a moiety selected from the group consisting of -C(=O)-O-alkyl, H, - $C(=O)-CF_3$, $-CF_3$, -CN, alkyl, -O-alkyl, $-N(alkyl)_2$ and $-N^+(alkyl)_3$;
or $R^{15}$ and $R^{16}$ together represent -CH=CH-CH=CH-;
$R^{16}$ denotes a moiety selected from the group consisting of H, F, Cl, -CN, $-CF_3$, alkyl, -O-alkyl and Br;
or $R^{16}$ and $R^{17}$ together represent -CH=CH-;
$R^{17}$ denotes a moiety selected from the group consisting of H, -O-alkyl, alkyl, - CN, $-CF_3$, F, Cl and Br;
or $R^{17}$ and $R^{18}$ together represent -CH=CH-CH=CH- or $-CH_2-CH=CH-CH_2-$;
$R^{18}$ denotes a moiety selected from the group consisting of H, alkyl, -O-alkyl, phenyl, -C(=O)-O-alkyl, $-CF_3$, $-C(=O)-CF_3$, -CN, $-N(alkyl)_2$ and $-N^+(alkyl)_3$;
or $R^{18}$ and $R^{19}$ together represent -CH=CH-CH=CH- or $-CH_2-CH=CH-CH_2-$;
$R^{19}$ denotes a moiety selected from the group consisting of H, -O-alkyl, alkyl, - CN, $-CF_3$, $-C(=O)-CF_3$, F, Cl and Br;
or $R^{19}$ and $R^{20}$ together represent -CH=CH-CH=CH-;
and $R^{20}$ denotes a moiety selected from the group consisting of -O-alkyl, alkyl, - CN, $-CF_3$, $-C(=O)-CF_3$, F, Cl and Br;
and S represents a compound of general formula II' or IIa',

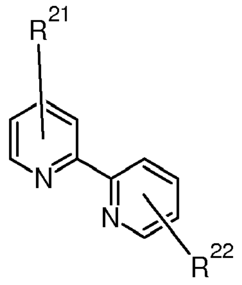

II’

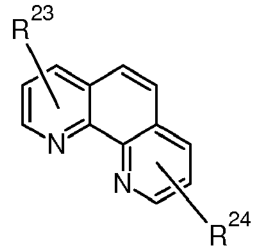

IIa’,

wherein $R^{21}$, $R^{22}$, $R^{23}$ and $R^{24}$, independently of one another, each represent a moiety selected from the group consisting of H, -C(=O)-O-alkyl, alkyl, -O-alkyl, -CN, phenyl, H, $-N(alkyl)_2$ and $-CF_3$.

If any of the moieties in any of the herein defined formulae represents phenyl, said phenyl radical is unsubstituted or substituted with one or more substituents, preferably unsubstituted or optionally substituted with 1, 2, 3, 4 or 5 substituent(s). Said substituent(s) may preferably be selected independently from the group consisting of methyl, ethyl, n-propyl, isopropyl, n-butyl, tert-butyl, sec-butyl, isobutyl, n-pentyl, - $O-CH_3$, $-O-C_2H_5$, $-O-CH_2-CH_2-CH_3$, $-O-CH(CH_3)_2$, $-O-C(CH_3)_3$, -C(=O)-OH, $-C(=O)-O-CH_3$, $-C(=O)-O-C_2H_5$, $-C(=O)-O-CH_2-CH_2-CH_3$, $-C(=O)-O-CH(CH_3)_2$, $-C(=O)-O-C(CH_3)_3$, F, Cl, Br, I, -CN, $-CF_3$, $-O-CF_3$, $-S-CF_3$, -OH, -SH, $-NH_2$, $-NH-CH_3$, $-NH-C_2H_5$, $-NH-CH_2-CH_2-CH_2$, $-NH-CH(CH_3)_2$, $-NO_2$, -CHO, $-CF_2H$, $-CFH_2$, $-C(O)-NH_2$, - $C(=O)-NH-CH_3$ and $-S(=O)_2-CH_3$.

If any of the moieties in any of the herein defined formulae represents and alkyl radical, preferably a $C_{1-10}$ alkyl radical, more preferably a $C_{1-5}$ alkyl radical, said alkyl is unsubstituted or substituted with one or more substituents, preferably unsubstituted or optionally substituted, with 1, 2, 3, 4 or 5 substituent(s). Said substituent(s) may preferably be selected independently from the group consisting of $-O-CH_3$, $-O-C_2H_5$, - $O-CH(CH_3)_2$, $-O-C(CH_3)_3$, -CN, $-CF_3$, $-OCF_3$, $-SCF_3$, -OH, -SH, $-NH_2$, $-NH-CH_3$, - $NH-C_2H_5$, $-NH-CH_2-CH_2-CH_3$, $-NH-CH(CH_3)_2$, $-NH-C(CH_3)_3$, $-N(CH_3)_2$ and - $N(C_2H_5)_2$-

Suitable alkyl radicals, which may be substituted by one ore more substituents may preferably be selected from the group consisting of methyl, ethyl, n-propyl, isopropyl, n-butyl, isobutyl, sec-butyl, tert-butyl, n-pentyl and neo-pentyl.

In the aforementioned formulae L is preferably a neutral monodentate ligand which is selected from the group consisting of carbon monoxide (CO), amine ($NR_3$), imine (RN=CR), pyridine, phosphane ($PR_3$), arsane ($AsR_3$), nitrile (RCN), isonitrile (RNC), ether (ROR), disulphide (RSR) and diselenide (RSeR).

In the aforementioned formulae L can also be an anionic ligand which is preferably selected from the group consisting of halogenide ($F^-$, $Cl^-$, $Br^-$, $I^-$), pseudohalogenide ($CN^-$, $OCN^-$, $SCN^-$), alkyl anion ($CH_3^-$), aryl anion ($Ph^-$), alkoholate ($RO^-$), thiolate ($RS^-$) and hydroxide ($OH^-$).

More preferably a metal complex is used, wherein

1) $M_1$ denotes $D(X)_2(Y)_2$ or $D(X)_2Z$, wherein
D represents a metal ion selected from the group consisting of Ir(III), Ru(II), Os(II) and Rh(III);
each X represents independently of one another a compound of general formula I or Ia,

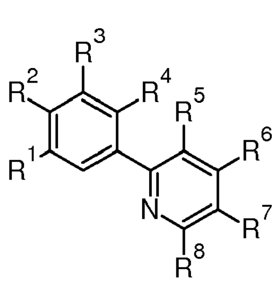

I

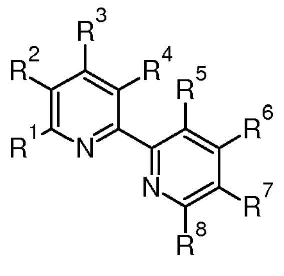

Ia,

whereby compounds of general formula I coordinate to D via one $sp^2$ hybridized carbon atom and one $sp^2$ hybridized

nitrogen atom and compounds of general forumula Ia coordinate to D via two $sp^2$ hybridized nitrogen atoms; wherein $R^1$ denotes a moiety selected from the group consisting of -C(=O)-O-alkyl, -C(=O)-$CF_3$, -$CF_3$, -CN, alkyl and H;

$R^2$ denotes a moiety selected from the group consisting of -O-alkyl, F, Cl, Br and H;

or $R^2$ and $R^3$ together represent -CH=CH-CH=CH-;

$R^3$ denotes a moiety selected from the group consisting of -C(=O)-O-alkyl, H, - C(=O)-$CF_3$, -$CF_3$, -CN, alkyl, -O-alkyl, -N(alkyl)$_2$ and -$N^+$(alkyl)$_3$;

or $R^3$ and $R^4$ together represent -CH=CH-CH=CH-;

$R^4$ denotes a moiety selected from the group consisting of H, F, Cl and Br;

or $R^4$ and $R^5$ together represent -CH=CH-;

$R^5$ denotes a moiety selected from the group consisting of H, F, Cl and Br;

or $R^5$ and $R^6$ together represent -CH=CH-CH=CH- or -$CH_2$-CH=CH-$CH_2$-;

$R^6$ denotes a moiety selected from the group consisting of H, alkyl, -O-alkyl, phenyl, -C(=O)-O-alkyl, -$CF_3$, -C (=O)-$CF_3$, -CN, -N(alkyl)$_2$ and -$N^+$(alkyl)$_3$;

or $R^6$ and $R^7$ together represent -CH=CH-CH=CH- or -$CH_2$-CH=CH-$CH_2$-;

$R^7$ denotes a moiety selected from the group consisting of H, F, Cl and Br;

or $R^7$ and $R^8$ together represent -CH=CH-CH=CH-;

and $R^8$ denotes a moiety selected from the group consisting of H, F, Cl and Br;

each Y represents independently of one another a moiety selected from the group consisting of-CN, -OCN and -SCN;

and Z represents a compound of general formula II or IIa,

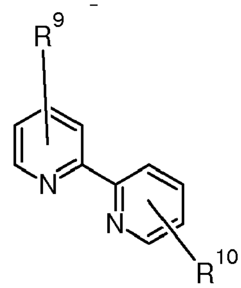

II

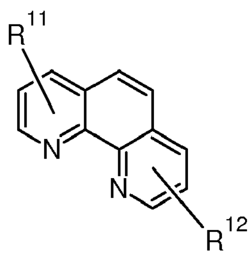

IIa,

Wherein

$R^9$, $R^{10}$, $R^{11}$ and $R^{12}$, independently of one another, each represent a moiety selected from the group consisting of -C(=O)-O-alkyl, alkyl, phenyl, H, -N(alkyl)$_2$ and -$CF_3$;

and whereby compounds of general formula II and IIa coordinate to D via two $sp^2$ hybridized nitrogen atoms;

or

2) $M_1$ denotes FTL, wherein

F represents a metal ion selected from the group consisting of Pt(II), Au (I) and Au(III);

T represents a compound of general formula III, IIIa or IIIb

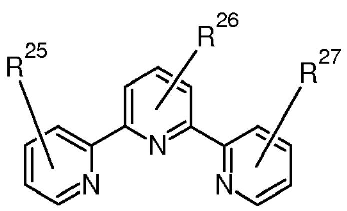

III

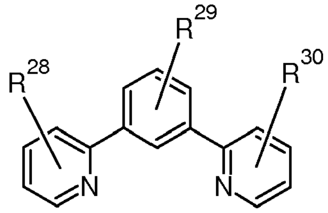

IIIa

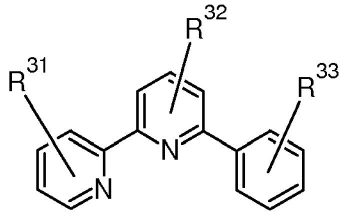

IIIb,

whereby compounds of general formula IIIa and IIIb coordinate to F via one $sp^2$ hybridized carbon atom and two $sp^2$ hybridized nitrogen atoms and compounds of general formula III coordinate to F via three $sp^2$ hybridized nitrogen atoms;

wherein $R^{25}$, $R^{26}$, $R^{27}$,$R^{28}$ $R^{29}$, $R^{30}$, $R^{31}$, $R^{32}$ and $R^{33}$, independently of one another, each represent a moiety

selected from the group consisting of F, Cl, -CN, - C(=O)-O-alkyl, alkyl, phenyl, H, -N(alkyl)$_2$ and -CF$_3$;
and L represents a ligand selected from the group consisting of CO, -NH(alkyl)$_2$, -NH$_2$(alkyl), F, Cl, Br, I, CN, OCN and SCN;
or
3) M$_1$ denotes G(U)$_2$, wherein
G represents a metal ion selected from the group consisting of Ir(III), Ru(II), Os(II) and Rh(III);
each U represents independently of one another a compound of general formula IV, IVa or IVb

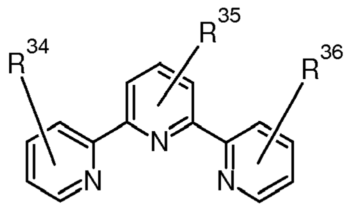
IV

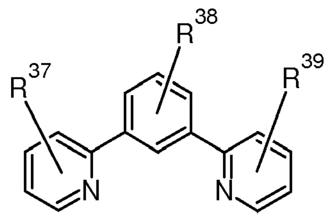
IVa

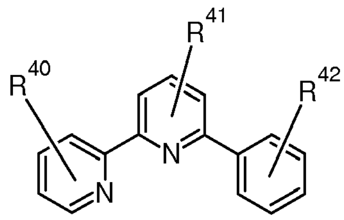
IVb,

whereby compounds of general formula IVa and IVb coordinate to G via one sp$^2$ hybridized carbon atom and two sp$^2$ hybridized nitrogen atoms and compounds of general formula IV coordinate to G via three sp$^2$ hybridized nitrogen atoms;
wherein R$^{34}$, R$^{35}$, R$^{36}$, R$^{37}$, R$^{38}$, R$^{39}$, R$^{40}$, R$^{41}$ and R$^{41}$, independently of one another, each represent a moiety selected from the group consisting of H, F, Cl, -CN, -C(=O)-O-alkyl, alkyl, phenyl, H, -N(alkyl)$_2$ and -CF$_3$;
and/or
4) M$_2$ denotes E(W)$_2$S, wherein
E represents a metal ion selected from the group consisting of Ir(III), Ru(II), Os(II) and Rh(III);
each W represents independently of one another a compound of general formula I' or Ia',

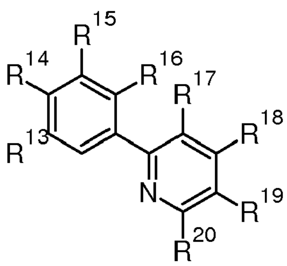
I'

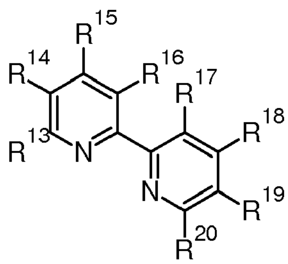
Ia',

whereby compounds of general formula I' coordinate to E via one sp$^2$ hybridized carbon atom and one sp$^2$ hybridized nitrogen atom and compounds of general formula Ia' coordinate to E via two sp$^2$ hybridized nitrogen atoms;

wherein R$^{13}$ denotes a moiety selected from the group consisting of -C(=O)-O-alkyl, -C(=O)-CF$_3$, -CF$_3$, -CN, alkyl and H;
R$^{14}$ denotes a moiety selected from the group consisting of -O-alkyl, F, Cl, Br and H;
or R$^{14}$ and R$^{15}$ together represent -CH=CH-CH=CH-;
R$^{15}$ denotes a moiety selected from the group consisting of -C(=O)-O-alkyl, H,- C(=O)-CF$_3$, -CF$_3$, -CN, alkyl, -O-alkyl, -N(alkyl)$_2$ and -N$^+$(alkyl)$_3$;
or R$^{15}$ and R$^{16}$ together represent -CH=CH-CH=CH-;
R$^{16}$ denotes a moiety selected from the group consisting of H, F, Cl and Br;
or R$^{16}$ and R$^{17}$ together represent -CH=CH-;
R$^{17}$ denotes a moiety selected from the group consisting of H, F, Cl and Br;
or R$^{17}$ and R$^{18}$ together represent -CH=CH-CH=CH- or -CH$_2$-CH=CH-CH$_2$-;
R$^{18}$ denotes a moiety selected from the group consisting of H, alkyl, -O-alkyl, phenyl, -C(=O)-O-alkyl, -CF$_3$, -C(=O)-CF$_3$, -CN, -N(alkyl)$_2$ and -N$^+$(alkyl)$_3$;
or R$^{18}$ and R$^{19}$ together represent -CH=CH-CH=CH- or -CH$_2$-CH=CH-CH$_2$-;

$R^{19}$ denotes a moiety selected from the group consisting of H, F, Cl and Br;
or $R^{19}$ and $R^{20}$ together represent -CH=CH-CH=CH-;
and $R^{20}$ denotes a moiety selected from the group consisting of H, F, Cl and Br;
and S represents a compound of general formula II' or IIa',

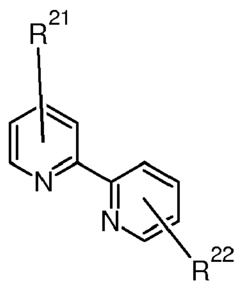

II'

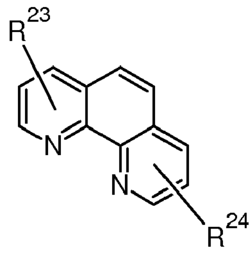

IIa',

Wherein
$R^{21}$, $R^{22}$, $R^{23}$ and $R^{24}$, independently of one another, each represent a moiety selected from the group consisting of H, -C(=O)-O-alkyl, alkyl, phenyl, H, -N(alkyl)$_2$ and -$CF_3$.

In another embodiment, one of $[M_1^{m+}]_x$ nd $[M_2^{n-}]$ can be an emitting organic non-metallic ion. Preferably, the emitting organic non-metallic ion is a small molecule or an oligomer having maximum 10 repeat units, i.e. not a polymer.

Examples of emitting organic non-metallic ions are emitting organic non-metallic molecules substituted with ionic groups.

Non-limiting examples of emitting organic non-metallic ions are ionic derivatives of anthracene, tetracene, phthalocyanines, xanthene, perylene, pyrenes, rubrene, coumarine, rhodamine, porphyrines, corrines, quinoline, quinacridone, dicyanomethylenepyran, cyanines, azo dyes, carbonyl dyes, polyenes, polymethines, thiopyran, pyrilium, thiapyrilium, fluorene, oligofluorene, indenofluorene, oligoindenofluorene, periflanthene, indenoperylene, bis(azinyl) amine boron, bis(azinyl)methane, fluoresceines, carbostyryl, anthraquinones and borates. Substitutents that may confer an ionic character to derivatives of those emitting organic non-metallic molecules are for instance $SO_3^-$, $SO4^-$, $COO^-$, -$NR_3^+$ wherein each R may independently represent for instance $C_1$-$C_6$-alkyl or $C_5$-$C_{10}$-aryl. A wide variation of emitting colour can be obtained from such derivatives in function of the substitution pattern.

An non-limiting example of family of red emitting organic non-metallic cations $M_1$ are perylene derivatives according to the formula V below

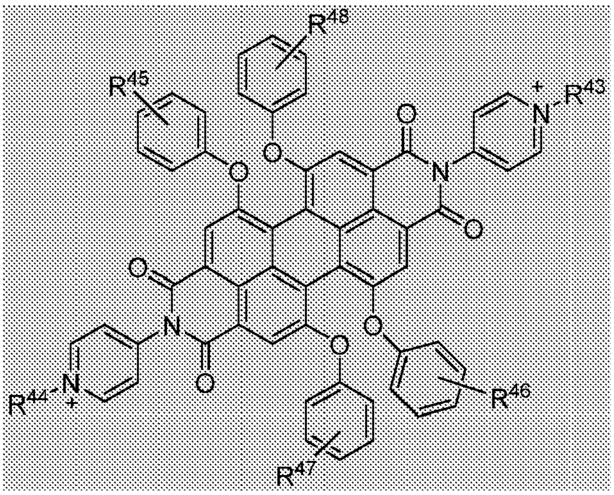

V,

wherein
$R^{43}$ and $R^{44}$, independently of one another, each denote a moiety selected from the group consisting of methyl, ethyl,

n-propyl, isopropyl, n-butyl, tert-butyl and n-pentyl;
and $R^{45}$, $R^{46}$, $R^{47}$ and $R^{48}$, independently of one another, each denote a moiety selected from the group consisting of H, methyl, -O-methyl, F, Cl and Br;
A specific example is

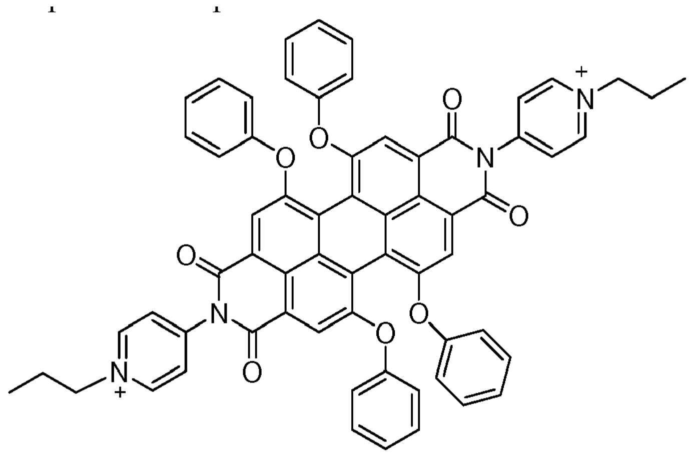

A non-limiting example of family of red emitting organic non-metallic anions $M_2$ are perylene derivative according to the formula VI below:

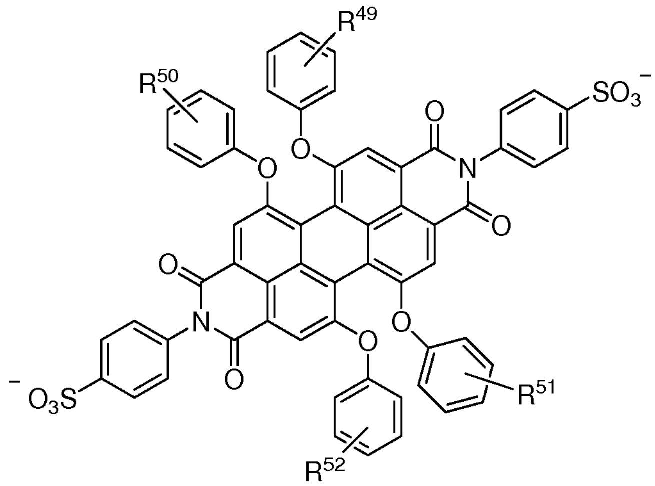

VI,

wherein $R^{49}$, $R^{50}$, $R^{51}$ and $R^{52}$, independently of one another, each denote a moiety selected from the group consisting of H, methyl, -O-methyl, F, Cl and Br;
A specific example is

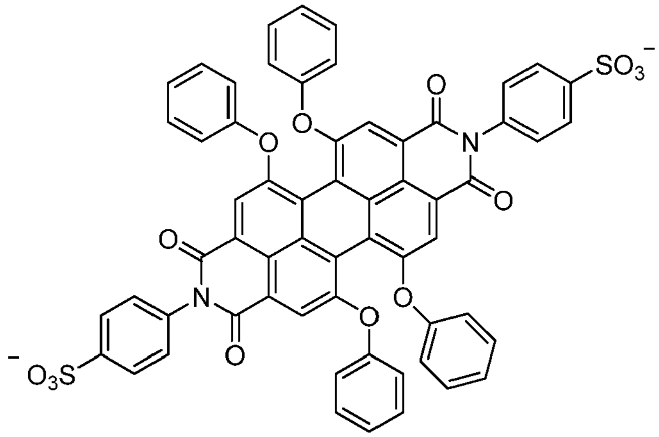

A non-limiting example of family of blue emitting organic non-metallic cation $M_1$ are fluorene derivatives according to the formula VII below:

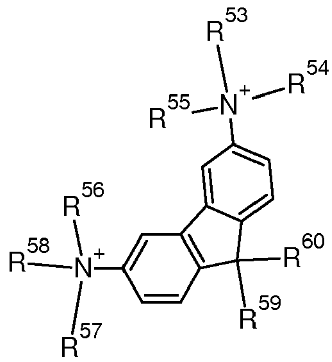

VII,

wherein $R^{53}$, $R^{54}$, $R^{55}$, $R^{56}$, $R^{57}$ and $R^{58}$, independently of one another each may denote a moiety selected from the group consisting of H, methyl, ethyl, n-propyl, isopropyl, n-butyl, tert-butyl, n-pentyl;
and $R^{59}$ and $R^{60}$, independently of one another each may denote a moiety selected from the group consisting of n-pentyl, neo-pentyl, iso-pentyl, n-hexyl, n-heptyl, n-octyl or ethylexyl.

A specific example is:

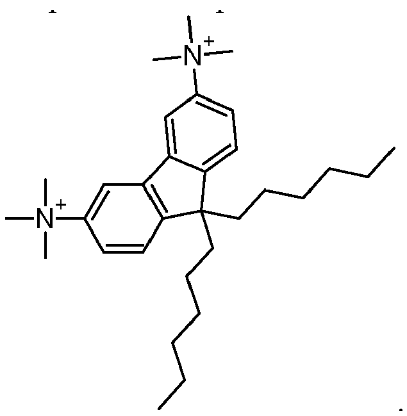

A non-limiting example of family of blue emitting organic non-metallic anion $M_2$ are fluorene derivatives according to the formula VIII below:

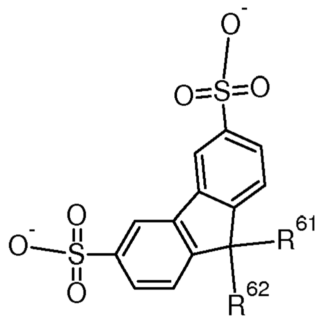

,

VIII,

wherein $R^{61}$ and $R^{61}$, independently of one another each may denote a moiety selected from the group consisting of n-pentyl, neo-pentyl, iso-pentyl, n-hexyl, n-heptyl, n-octyl or ethylhexyl.

A specific example is:

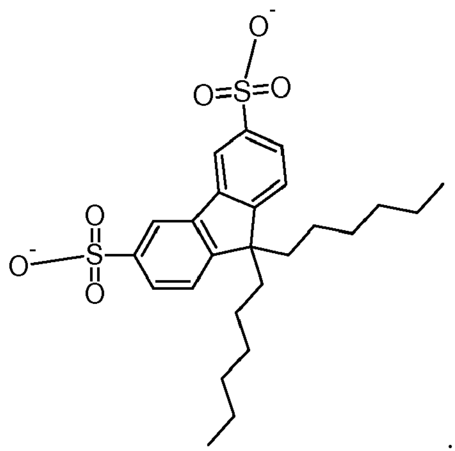

.

Hereafter are a few example of complex salt according to embodiments of the present invention:

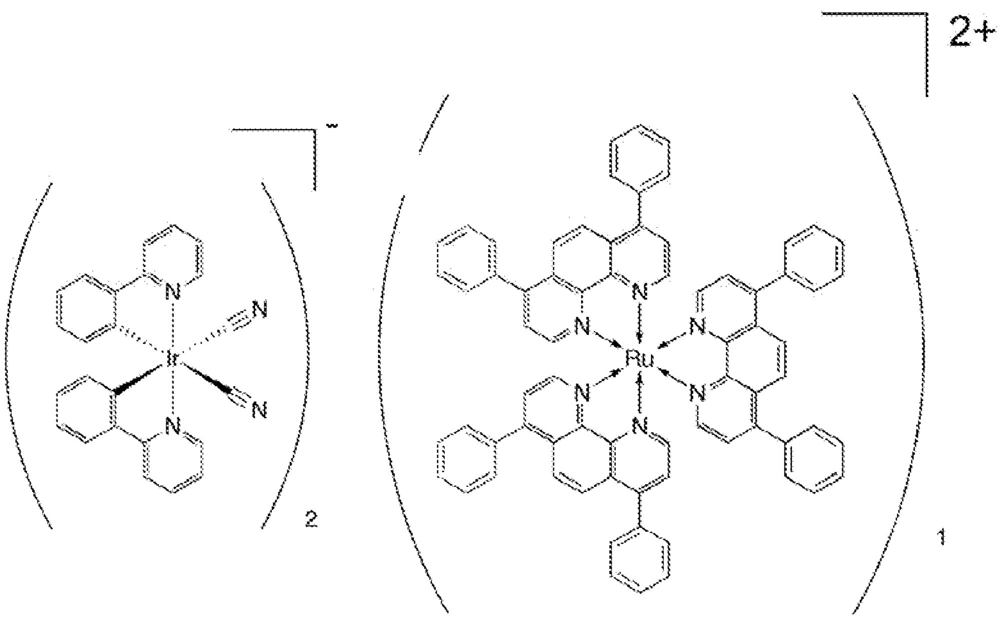

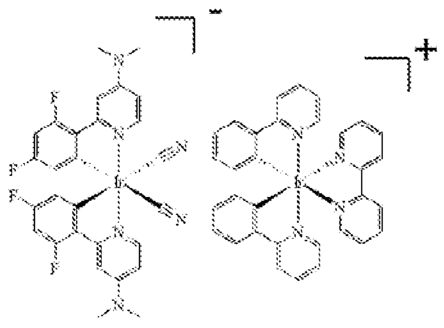

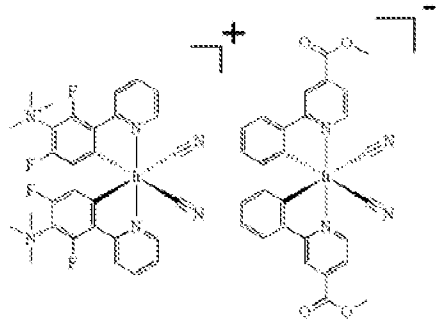

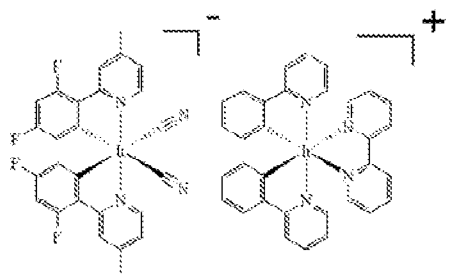

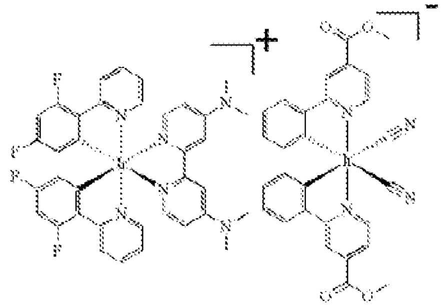

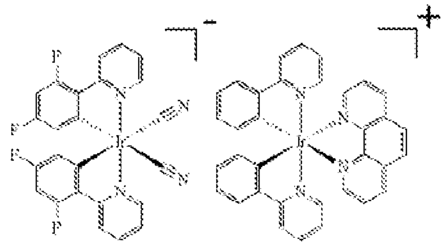

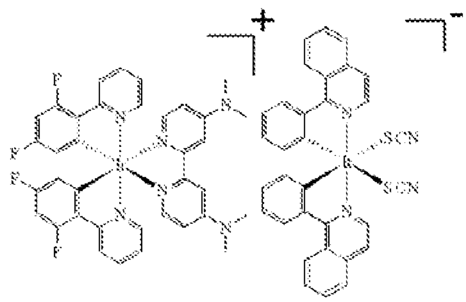

In any embodiment of the first aspect of the present invention, an adhesion promoter may be comprised in the composition of the light emitting material. Such an adhesion promoter is well known to the person skilled in the art. This is particularly advantageous when the light emitting material is used for coating a substrate such as the case of a inorganic LED or the glass tube of a fluorescent lamp.

In a second aspect, the present invention relates to a process for the preparation of emitting material and in particular a complex salt according to the first aspect of the present invention.

In an embodiment of the second aspect, the invention is directed to a process for the preparation of a complex salt disclosed in any of claims 1 to 11, **characterized in that** at least one salt of general formula $[M_1^{m+}]_x A^-$, wherein $M_1$ is defined according to any of claims 1 to 4 and $A^-$ denotes an anion selected from the group consisting of Cl-, Br-, $PF_6^-$, $BF_4^-$ and $F^-$ is reacted with at least one salt of general formula $[M_2^{n-}]_y C^+$,
wherein $M_2$ is defined as given above and C denotes a cation selected from the group consisting of $Na^+$, $K^+$, $Li^+$ and $NR_4^+$ whereby each R independently of one another denotes H or alkyl, optionally in the presence of at least one solvent, at a temperature in the range between 10 and 50 °C, preferably 15 and 30 °C to obtain a metal complex of general formula $[M_1^{m+}]_x [M_2^{n-}]_y$ which is optionally purified and/or isolated. Preferably, C is $K^+$ and/or the solvent is a polar aprotic solvent selected from the group consisting of methanol, ethanol, water and mixtures thereof.

The synthesis of compounds of general formula $[M_1^{m+}]_x A^-$ and general formula $[M_2^{n-}]_y C^+$ is inter alia described in M. K. Nazeeruddin et al., J. Am. Chem. Soc. 2003, 125, 8790 and M. K. Nazeeruddin et al., Inorg. Chem. 2007, 46, 5989. The corresponding parts of the disclosure are hereby incorporated by reference.

In a third aspect, the present invention relates to a light emitting device comprising an emitting layer, said emitting layer comprising or consisting of a light emitting material according to the first aspect of the present invention.

More preferably, the emitting layer is capable of emitting light having CIE 1931 coordinates (x, y) in the range from (0.200,0.200) to (0.550,0.500) upon excitation at a wavelength between 300 and 500 nm, or upon applying a voltage

across said emitting layer

In embodiments, the light emitting device is an organic light emitting device. An organic light emitting device generally comprises:

- a substrate (preferably a transparent substrate),
- a first conductive layer (preferably a transparent conductive layer),
- optionally, one or more hole transporting and/or hole injecting and/or electron blocking layers,
- one or more emitting layers,
- optionally, one or more electron transporting and/or electron injecting, and or hole blocking layers, and
- a second conducting layer.

The substrate can be formed of one material or of more than one material. The substrate can be organic or inorganic, planar or non-planar. Examples of suitable inorganic substrates are glass and quartz. Examples of suitable organic substrates are transparent polymers such as but not limited to poly(methylmethacrylate) (PMMA) and polycarbonate. The substrate can be rigid or flexible.

The first conductive layer plays the role of an anode. A typical example is indium-tin oxide (ITO). Other examples are tin oxides doped with e.g. Sn or F.

Usable materials for hole injecting layers (or hole transporting layers or electron blocking layers) are well known to the person skilled in the art and include for instance polyaniline ("PANI"), poly(3,4-ethylenedioxythiophene) ("PEDOT"), polypyrrole, various triarylamines and carbazoles, such as 4,4'-bis[N-(naphthyl)-N-phenyl-amino]biphenyl ($\alpha$-NPD), N, N'-bis(3-methylphenyl)-N,N'-diphenyl-[1,1'-biphenyl]4,4'diamine (TPD), 4,4'-bis[N-(2-naphthyl)-N-phenyl-amino]biphenyl ($\beta$-NPD), 4,4',4"-tris(3-methylphenylphenylamino)triphenylamine (MTDATA), 4,4'-N,N'-dicarbazole-biphenyl (CBP), N,N',N"-1,3,5-tricarbazolylbenzene (tCP) and 4,4',4"-tris(N-carbazolyl)-triphenylamine (TCTA). Further, p-doping may be used, incorporating electron acceptors such as e.g. tetrathiafulvalene tetracyanoquinodimethane ("TTF-TCNQ")), 2,3,5,6-tetrafluoro-7,7,8,8-tetracyanoquinodimethane (F4-TCNQ), as well as high work function metal oxides such as molybdenum oxide, vanadium oxide, and tungsten oxide, amongst others.

The device may further comprise an electron blocking layer between the emitting layer and the hole transporting layer. This embodiment is preferred when the emitting layer is an electron conducting layer.

In embodiments of the present invention, the one or more emitting layer are preferably a single emitting layer comprising or consisting of a light emitting material as defined in the third aspect of the present invention.

Usable materials for electron injecting layers (or electron transport layer or hole-blocking layer) are well known to the person skilled in the art and include for instance a metal-chelated oxinoid compound (e.g., Alq3 or aluminum(III) bis(2-methyl-8-quinolinato)4-phenylphenolate ("BAlq")); a phenanthroline-based compound (e.g., 2,9-dimethyl-4,7-diphenyl-1,10-phenanthroline ("DDPA") or 9,10-diphenylanthracence ("DPA")); an azole compound (e.g., 2-tert-butylphenyl-5-biphenyl-1,3,4-oxadiazole ("PBD") or 3-(4-biphenyl)-4-phenyl-5-(4-t-butylphenyl)-1,2,4-triazole ("TAZ"); a diphenylanthracene derivative; a dinaphthylanthracene derivative; 4,4-bis(2,2-diphenyl-ethen-1-yl)-biphenyl ("DPVBI"); 9,10-di-beta-naphthylanthracene; 9,10-di-(naphenthyl)anthracene; 9,10-di-(2-naphthyl)anthracene ("ADN");4,4'-bis (carbazol-9-yl)biphenyl ("CBP"); 9,10-bis-[4-(2,2-diphenylvinyl)-phenyl]-anthracene ("BDPVPA"); anthracene, N-arylbenzimidazoles (such as "TPBI"); 1,4-bis[2-(9-ethyl-3-carbazoyl)vinylenyl]benzene; 4,4'-bis[2-(9-ethyl-3-carbazoyl)vinylenyl]-1,1'-biphenyl; 9,10-bis[2,2-(9,9-fluorenylene)vinylenyl]anthracene; 1,4-bis[2,2-(9,9-fluorenylene)vinylenyl]benzene; 4,4'-bis[2,2-(9,9-fluorenylene)vinylenyl]-1,1'-biphenyl; perylene, substituted perylenes; tetra-tert-butylperylene ("TBPe"); bis(3,5-difluoro-2-(2-pyridyl)phenyl-(2-carboxypyridyl)iridium III ("F(Ir)Pic"), a pyrene, a substituted pyrene; a styrylamine; a fluorinated phenylene; oxidazole; 1,8-naphthalimide; a polyquinoline; as well as low work function metal oxides such as titanium oxide and zinc oxide, amongst others.

The device may further comprise a hole blocking layer between the emitting layer and the electron transporting layer. This embodiment is preferred when the emitting layer is a hole conducting layer. An example of hole blocking layer is 2,9-dimethyl-4,7-diphenyl-1,10-phenanthroline (also called bathocuproine (BCP))

The second conducting layer plays the role of a cathode and is generally a metallic cathode such as Al, Ag, Ba, Ca, among others and combination thereof.

In embodiments of the present invention, the light emitting device further comprises a light source capable of emitting light at a wavelength between 250 and 500 nm, preferably between 300 and 450 nm. For instance, a light emitting device according to embodiments of the present invention can be a fluorescent lamp wherein the gas filled tube is coated with a phosphor comprising a light emitting material according to the first aspect of the present invention. Another example of light emitting device according to embodiments of the present invention comprises an organic or inorganic blue or near-UV LED of the prior art, comprising a layer of emitting material according to the first aspect of the present invention. In the case of an organic LED (OLED), the light emitting material according to the first aspect of the present invention can for instance form the top layer of a multilayer (e.g. a bilayer) OLED structure. In the case of an inorganic LED, the light emitting material according to the first aspect of the present invention can be coated on the lens

and/or on the transparent case (preferably its inner side) enclosing the LED. For this purpose, a 5 mm UV LED emitting at 360 nm commercially available from Le Group Fox, Inc. can for instance be used.

Examples

General procedure for the preparation of complex salts of general formula $[M_1^{m+}]_x [M_2^{n-}]_y$

(a) A salt of general formula $[M_1^{m+}]_x [A^{p-}]_w$, wherein $M_1$ is defined as given above and A is a non-emitting counter-anion (e.g. $Cl^-$, $Br^-$, $PF_6^-$, $BF_4^-$ and $F^-$ and preferably $Cl^-$) and m x = p w, and

(b) a salt of general formula $[M_2^{n-}]_y [C^{q+}]_z$, wherein $M_2$ is defined as given above and C is a non-emitting counter-anion (e.g. $Na^+$, $K^+$, $Li^+$ and $NR_4^+$ and preferably $K^+$) and n y = q z,

are separately dissolved in a suitable solvent such as e.g. methanol and, subsequently, both solutions are joined. A non-solvent for the complex salt (e.g. Water) is added in a suitable amount (an amount of about five times in volume the amount of the solvent (e.g. methanol) is usually a suitable amount) and the solvent (e.g. methanol) is removed (e.g. evaporated under reduced pressure). The precipitate is isolated (e.g. filtrated) and purified (e.g. on a Sephadex column using a suitable eluent (e.g. methanol)). When necessary, further purification can be achieved by for instance slow precipitation of a solution of the desired complex $[M_1^{m+}]_x [M_2^{n-}]_y$ in a suitable solvent (e.g. dichloromethane) with a non-solvent (e.g. hexane) or by slow evaporation of a suitable solvent (e.g. methanol) from a solution of the desired complex $[M_1^{m+}]_x [M_2^{n-}]_y$ in said suitable solvent.

Synthesis of EB 123

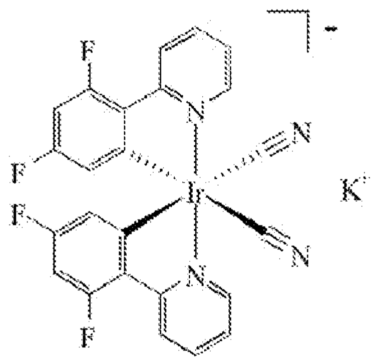

EB123 was obtained by refluxing the corresponding chloryl-bridge iridium dimeric complex in a solvent mixture of methanol and dichloromethane in the presence of KCN. The solvents were evaporated and the crude residue was dissolved in methanol. Water was added, the precipitate filtered, washed with water and dried to obtain complex EB123.

Synthesis of EBPPbp

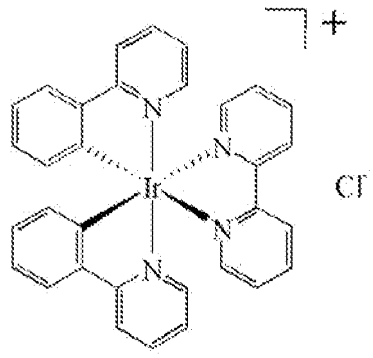

This compound was synthesised according to M. K. Nazeeruddin et al., Inorg. Chem. 2007, 46, 5989 with a little modification: after refluxing the corresponding chloryl-bridge iridium dimeric complex in dichloromethane in the presence of bipyridine, solvents were evaporated to dryness. The crude mixture was dissolved in a minimum amount of dichloromethane and precipitated with diethyl ether. The precipitate was filtered, washed with diethyl ether and dried to obtain the complex EBPPbp as the chloride salt.

Synthesis of EB 124

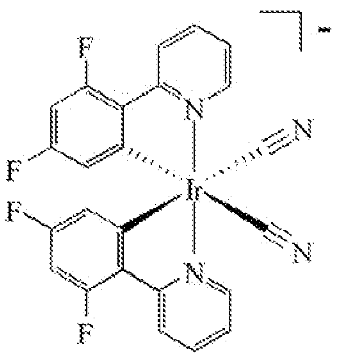

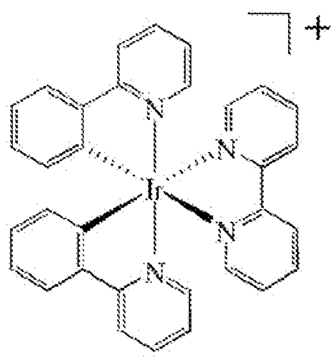

Water was added to a mixture of EB123 and EBPPbp in a 1:1 ratio in methanol. Methanol was evaporated, the precipitate was filtered, dried and purified on Sephadex. The solid thus obtained was dissolved in a minimum amount of dichloromethane and put into diethyl ether. After filtration and drying, EB124 was obtained as a pale orange solid.

$^1H$ NMR ($CDCl_3$, 400 MHz) 9.78 (2H, d); 9.17 (2H, d); 8.21 (4H, d); 7.98 (2H, d); 7.93 (2H, d); 7.77 (2H, t); 7.71 (2H, d); 7.66 (2H, t); 7.51 (2H, d), 7.37 (2H, t); 7.08 (2H, t), 7.02 (2H, t); 6.96 (4H, t); 6.31 (2H, d); 6.23 (2H, t); 5.75 (2H, d)

The absorption spectra in DMSO of EB123 (dashed line), EBPPbp (squares), EB124 (circles) and the addition of the spectra of EB123 to the spectra of EBPPbp (solid line) are shown in FIG. 1. The absorption spectra of EB124 is very close to the sum of the absorption spectra of EB123 and EBPPbp. This indicates no or low interaction between both moieties in their ground state, and one to one stoechiometry.

FIG. 2 shows the emission spectra in non-degassed DMSO of EB123 under excitation at 350 nm. It emits blue light with a maximum emission at 484 nm (solid line). Absorption (crosses) and excitation spectra (circles) followed at 454 nm are also shown. Width of the line at mid-heigh

(FWMH) is equal to 81 nm. x chromaticity coordinate (CIE 1931) is equal to 0.169. y chromaticity coordinate (CIE 1931) is equal to 0.291.

Figure 3 shows the emission spectra of EBPPbp in non degazed DMSO solution under excitation at 350 nm. It emits orange color with a maximum emission at 607 nm (solid line). Absorption (crosses) and excitation spectra (circles) followed at 607 nm are also shown. FWMH is equal to 119 nm. x chromaticity coordinate (CIE 1931) is equal to 0.555. y chromaticity coordinate (CIE 1931) is equal to 0.437.

Figure 4 shows the emission spectra of EB124 in non-degazed DMSO solution. The excitation was performed at 350 nm. The wavelength of maximal absorption is 483 nm. FWMH is 224 nm. x chromaticity coordinate (CIE 1931) is equal to 0.374. y chromaticity coordinate (CIE 1931) is equal to 0.370.

Emitting material comprising EB124 and a PVP matrix.

EB124 has been dissolved in a PVP solution in an amount of 0.25% by dry weight or 4.4 wt% by dry weight. The solution has been coated on a transparent substrate. White light has been observed having the following CIE 1931 coordinates:

(0.40, 0.49) for the 4.4 wt% film
(0.38, 0.44) for the 0.25 wt% film

NMR spectroscopy

NMR spectra have been recorded using a Bruker AV 400 spectrometer.

UV-VIS spectroscopy

UV-visible spectra were measured on a HP 8452A UV-visible spectra were carried out in DMSO solutions concentration of from $10^{-7}$ mM to $10^{-4}$ mM.

Photoluminescence spectroscopy

Photoluminescent spectra were measured on a Spex Fluorolog 112 spectrofluometer using a 90 °C optical geometry. Photoluminescent spectra measurements (at concentration of from $10^{-7}$ mM to $10^{-4}$ mM) were carried out at room temperature in DMSO solution.

Chromaticity

CIE co-ordinates were determined as follow: The calculation of the CIE chromaticity coordinates were determined by multiplying the spectral power at each wavelength times the weighting factor from each of the three color matching functions. Summing these contributions gives the tristimulus values X, Y and Z, from which the chromaticity coordinates are derived as

$$x=X/(X+Y+Z) \text{ and } y=Y/(X+Y+Z)$$

## Claims

1. A white light emitting material comprising a complex salt of the general formula $[M_1^{m+}]_x\,[M_2^{n-}]_y$ wherein:

    - xm=yn,
    - $[M_1^{m+}]$ and $[M_2^{n-}]$ are ionic light emitting moieties which have complementary emission spectra, one emitting in the blue region of the visible spectra and the other, in the red region of the visible spectra, and

    wherein at least one of $M_1$ and $M_2$ is a metallic complex.

2. The white light emitting material according to claim 1, wherein one of $[M_1^{m+}]_x$ and $[M_2^{n-}]_y$ has its emission spectra with a wavelength of maximum emission in the range 550 - 740 nm and the other has its emission spectra with a wavelength of maximum emission in the range 390 - 550 nm.

3. The white light emitting material according to claim 1 or claim 2, wherein the complex salt is capable of emitting light having CIE 1931 coordinates (x, y) in the range from (0.200,0.200) to (0.550,0.500).

4. The white light emitting material according to any one of the preceding claims, wherein both $M^1$ and $M^2$ are metallic complexes.

5. The white light emitting material according to any one of the preceding claims, further comprising a liquid, gel or solid polar, non-ionic medium as a matrix.

**6.** The white light emitting material according to claim 5, wherein said polar, non-ionic medium is a polymer with a dielectric constant of at least 3.0.

**7.** The white light emitting material according to claim 6, wherein said polar, non-ionic medium is a hole and/or electron transporting material.

**8.** The white light emitting material according to claim 7, wherein said polar, non ionic medium comprises poly(vinylcarbazole) and/or oxadiazoles.

**9.** The white light emitting material according to any one of claims 5 to 8,
wherein said polar, non-ionic medium comprises an ionic dopant such as an ionic liquid.

**10.** The white light emitting material according to any preceding claims,
wherein $M_1$ is selected from the group consisting of $D(X)_2(Y)_2$, $D(X)_2Z$, FTL, $G(U)_2$ and $CuP_2$ and/or $M_2$ is $E(W)_2S$, wherein
D represents a metal ion selected from the group consisting of Ir, Ru, Os and Rh;
each X represents independently of one another a compound of general formula I or Ia,

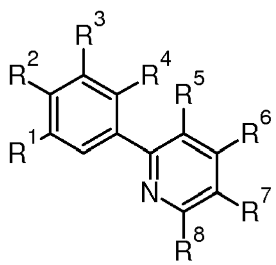

I

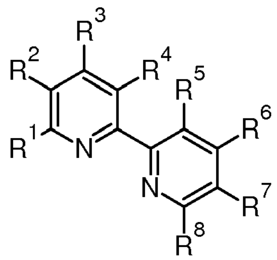

Ia,

whereby compounds of general formula I coordinate to D via one $sp^2$ hybridized carbon atom and one $sp^2$ hybridized nitrogen atom and compounds of general formula Ia coordinate to D via two $sp^2$ hybridized nitrogen atoms;
wherein $R^1$ denotes a moiety selected from the group consisting of F, Cl, -O-alkyl, -C(=O)-O-alkyl, -C(=O)-$CF_3$, -$CF_3$, -CN, alkyl and H;
or $R^1$ and $R^2$ together represent -CH=CH-CH=CH-;
$R^2$ denotes a moiety selected from the group consisting of -O-alkyl, F, Cl, Br, - C(=O)-O-alkyl, -C(=O)-$CF_3$, -$CF_3$, -CN, alkyl and H;
or $R^2$ and $R^3$ together represent -CH=CH-CH=CH-;
$R^3$ denotes a moiety selected from the group consisting of -C(=O)-O-alkyl, H, - C(=O)-$CF_3$, -$CF_3$, -CN, alkyl, -O-alkyl, -N$(alkyl)_2$ and-N$(alkyl)_3$;
or $R^3$ and $R^4$ together represent -CH=CH-CH=CH-;
$R^4$ denotes a moiety selected from the group consisting of -C(=O)-O-alkyl, - C(=O)-$CF_3$, -O-alkyl, alkyl, H, F, Cl and Br;
or $R^4$ and $R^5$ together represent -CH=CH-;
$R^5$ denotes a moiety selected from the group consisting of -C(=O)-O-alkyl, - C(=O)-$CF_3$, -O-alkyl, alkyl, H, F, Cl and Br;
or $R^5$ and $R^6$ together represent -CH=CH-CH=CH- or -$CH_2$-CH=CH-$CH_2$-;
$R^6$ denotes a moiety selected from the group consisting of H, alkyl, -O-alkyl, phenyl, -C(=O)-O-alkyl, -$CF_3$, -C (=O)-$CF_3$, -CN, -N$(alkyl)_2$ and -N$(alkyl)_3$;
or $R^6$ and $R^7$ together represent -CH=CH-CH=CH- or -$CH_2$-CH=CH-$CH_2$-;
$R^7$ denotes a moiety selected from the group consisting of H, F, Cl, Br, -CN, - $CF_3$, -O-alkyl, alkyl, -C(=O)-O-alkyl and -C(=O)-$CF_3$;
or $R^7$ and $R^8$ together represent -$CH_3$=CH-CH=CH-;
and $R^8$ denotes a moiety selected from the group consisting of -CN, -$CF_3$, - C(=O)-$CF_3$, -C(=O)-O-alkyl, O-alkyl, alkyl, H, F, Cl and Br;
each Y represents independently of one another a moiety selected from the group consisting of F, Cl, Br, $CH_3$, -O-alkyl, OH, -CN, -OCN and -SCN;
and Z represents a compound of general formula II or IIa,

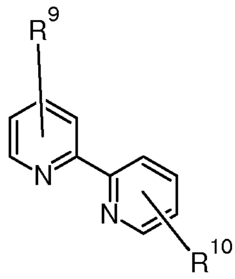 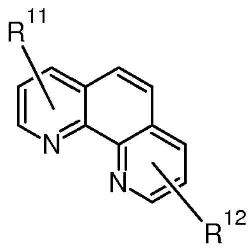

II IIa,

wherein
$R^9$, $R^{10}$, $R^{11}$ and $R^{12}$, independently of one another, each represent a moiety selected from the group consisting of -C(=O)-O-alkyl, alkyl, phenyl, H, -N(alkyl)$_2$, F, Cl, Br, - O-alkyl and -$CF_3$;
and whereby compounds of general formula II and IIa coordinate to D via two $sp^2$ hybridized nitrogen atoms;
F represents a metal ion selected from the group consisting of Pt and Au;
T represents a compound of general formula III, IIIa or IIIb

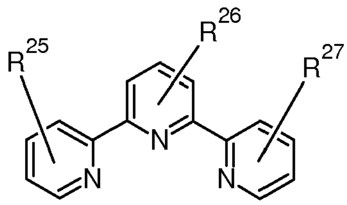 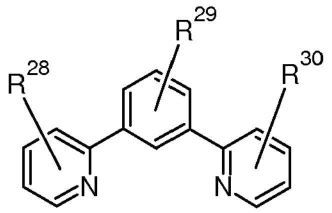 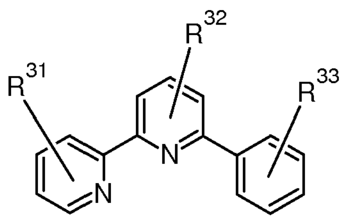

III IIIa IIIb,

whereby compounds of general formula III and IIIb coordinate to F via one $sp^2$ hybridized carbon atom and two $sp^2$ hybridized nitrogen atoms and compounds of general formula III coordinate to F via three $sp^2$ hybridized nitrogen atoms;
wherein $R^{25}$, $R^{26}$, $R^{27}$, $R^{28}$, $R^{29}$, $R^{30}$, $R^{31}$, $R^{32}$ and $R^{33}$, independently of one another, each represent a moiety selected from the group consisting of F, Cl, -CN, - C(=O)-O-alkyl, alkyl, -O-alkyl, phenyl, H, -N(alkyl)$_2$ and -$CF_3$;
and L represents a ligand selected from the group consisting of CO, -N(alkyl)$_2$, - $NH_2$(alkyl), F, Cl, Br, I, CN, OCN, -O-alkyl, -OH and SCN;
G represents a metal ion selected from the group consisting of Ir, Ru, Os and Rh;
each U represents independently of one another a compound of general formula IV, IVa or IVb,

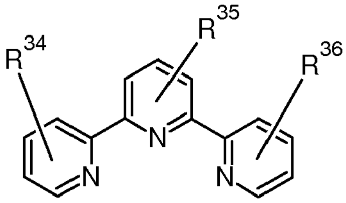 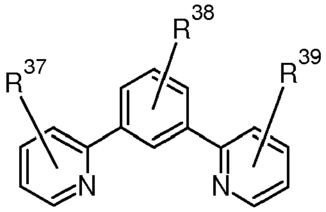 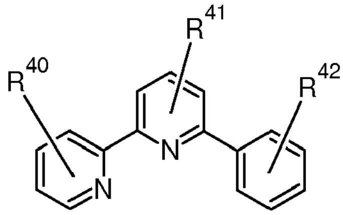

IV IVa IVb,

whereby compounds of general formula IVa and IVb coordinate to G via one $sp^2$ hybridized carbon atom and two $sp^2$ hybridized nitrogen atoms and compounds of general formula IV coordinate to G via three $sp^2$ hybridized nitrogen atoms;
wherein $R^{34}$, $R^{35}$, $R^{36}$, $R^{37}$, $R^{38}$, $R^{39}$, $R^{40}$, $R^{41}$ and $R^{42}$, independently of one another, each represent -O-alkyl, F,

Cl, -CN, -C(=O)-O-alkyl, alkyl, phenyl, H, - N(alkyl)$_2$ and -CF$_3$;
wherein each P independently of one another represents a compound of general formula IX or X,

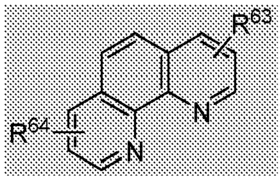
IX

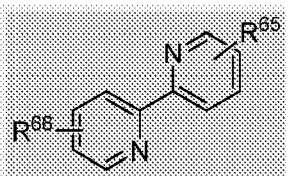
X,

wherein $R^{63}$, $R^{64}$, $R^{65}$ and $R^{66}$, independently of one another each denote a moiety selected from the group consisting of F, Cl, -CN, -C(=O)-O-alkyl, alkyl, -O-alkyl, phenyl, H, -N(alkyl)$_2$ and -CF$_3$;
whereby compounds of general formula IX and X coordinate to Cu via two sp$^2$ hybridized nitrogen atoms;
E represents a metal ion selected from the group consisting of Ir, Ru, Os and Rh;
each W represents independently of one another represents a compound of general formula I' or Ia',

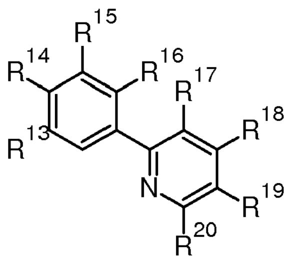
I'

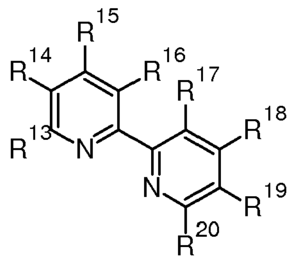
Ia',

whereby compounds of general formula I' coordinate to E via one sp$^2$ hybridized carbon atom and one sp$^2$ hybridized nitrogen atom and compounds of general formula Ia' coordinate to E via two sp$^2$ hybridized nitrogen atoms;
wherein $R^{13}$ denotes a moiety selected from the group consisting of F, Cl, -O-alkyl, -C(=O)-O-alkyl, -C(=O)-CF$_3$, -CF$_3$, -CN, alkyl and H;
or $R^{13}$ and $R^{14}$ together represent -CH=CH-CH=CH-;
$R^{14}$ denotes a moiety selected from the group consisting of -C(=O)-O-alkyl, - C(=O)-CF$_3$, -CF$_3$, -CN, -O-alkyl, F, Cl, Br and H;
or $R^{14}$ and $R^{15}$ together represent -CH=CH-CH=CH-;
$R^{15}$ denotes a moiety selected from the group consisting of -C(=O)-O-alkyl, H, - C(=O)-CF$_3$, -CF$_3$, -CN, alkyl, -O-alkyl, -N(alkyl)$_2$ and -N(alkyl)$_3$;
or $R^{15}$ and $R^{16}$ together represent -CH=CH-CH=CH-;
$R^{16}$ denotes a moiety selected from the group consisting of H, F, Cl, -CN, -CF$_3$, alkyl, -O-alkyl and Br;
or $R^{16}$ and $R^{17}$ together represent -CH=CH-;
$R^{17}$ denotes a moiety selected from the group consisting of H, -O-alkyl, alkyl, - CN, -CF$_3$, F, Cl and Br;
or $R^{17}$ and $R^{18}$ together represent -CH=CH-CH=CH- or -CH$_2$-CH=CH-CH$_2$-;
$R^{18}$ denotes a moiety selected from the group consisting of H, alkyl, -O-alkyl, phenyl, -C(=O)-O-alkyl, -CF$_3$, -C (=O)-CF$_3$, -CN, -N(alkyl)$_2$ and -N(alkyl)$_3$;
or $R^{18}$ and $R^{19}$ together represent -CH=CH-CH=CH- or -CH$_2$-CH=CH-CH$_2$-;
$R^{19}$ denotes a moiety selected from the group consisting of H, -O-alkyl, alkyl, - CN, -CF$_3$, -C(=O)-CF$_3$, F, Cl and Br;
or $R^{19}$ and $R^{20}$ together represent -CH=CH-CH=CH-;
and $R^{20}$ denotes a moiety selected from the group consisting of -O-alkyl, alkyl, - CN, -CF$_3$, -C(=O)-CF$_3$, F, Cl and Br;
and S represents a compound of general formula II' or IIa',

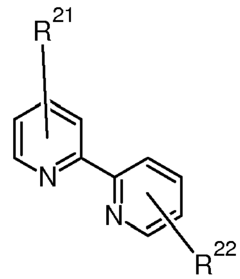

II'

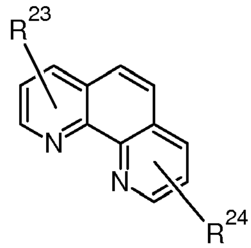

IIa',

wherein $R^{21}$, $R^{22}$, $R^{23}$ and $R^{24}$, independently of one another, each represent a moiety selected from the group consisting of H, -C(=O)-O-alkyl, alkyl, -O-alkyl, -CN, phenyl, H, $-N(alkyl)_2$ and $-CF_3$

11. A process for the preparation of a complex salt disclosed in any of claims 1 to 10, **characterized in that** at least one salt of general formula $[M_1^{m+}]_x A^-$, wherein $M_1$ is defined according to any of claims 1 to 4 and $A^-$ denotes an anion selected from the group consisting of Cl-, Br-, $PF_6^-$, $BF_4^-$ and $F^-$ is reacted with at least one salt of general formula $[M_2^{n-}]_y C^+$, wherein $M_2$ is defined according to any of claims 1 to 4 and C denotes a cation selected from the group consisting of $Na^+$, $K^+$, $Li^+$ and $NR_4^+$ whereby each R independently of one another denotes H or alkyl, optionally in the presence of at least one solvent, at a temperature in the range between 10 and 50 °C, preferably 15 and 30 °C to obtain a metal complex of general formula $[M_1^{m+}]_x [M_2^{n-}]_y$ which is optionally purified and/or isolated.

12. A light emitting device comprising an emitting layer, said emitting layer comprising a light emitting material according to any of claims 1 to 10.

13. The light emitting device according to claim 12, wherein the emitting layer is capable of emitting light having CIE 1931 coordinates (x, y) in the range from (0.200,0.200) to (0.550,0.500) upon excitation at a wavelength between 300 and 500 nm, or upon applying a voltage across said emitting layer.

14. The light emitting device according to claim 12 or claim 13 further comprising a light source capable of emitting light at a wavelength between 250 and 500 nm.

15. The light emitting device according to any one of claims 12 to 14 wherein said emitting layer is the only light emitting layer of said device.

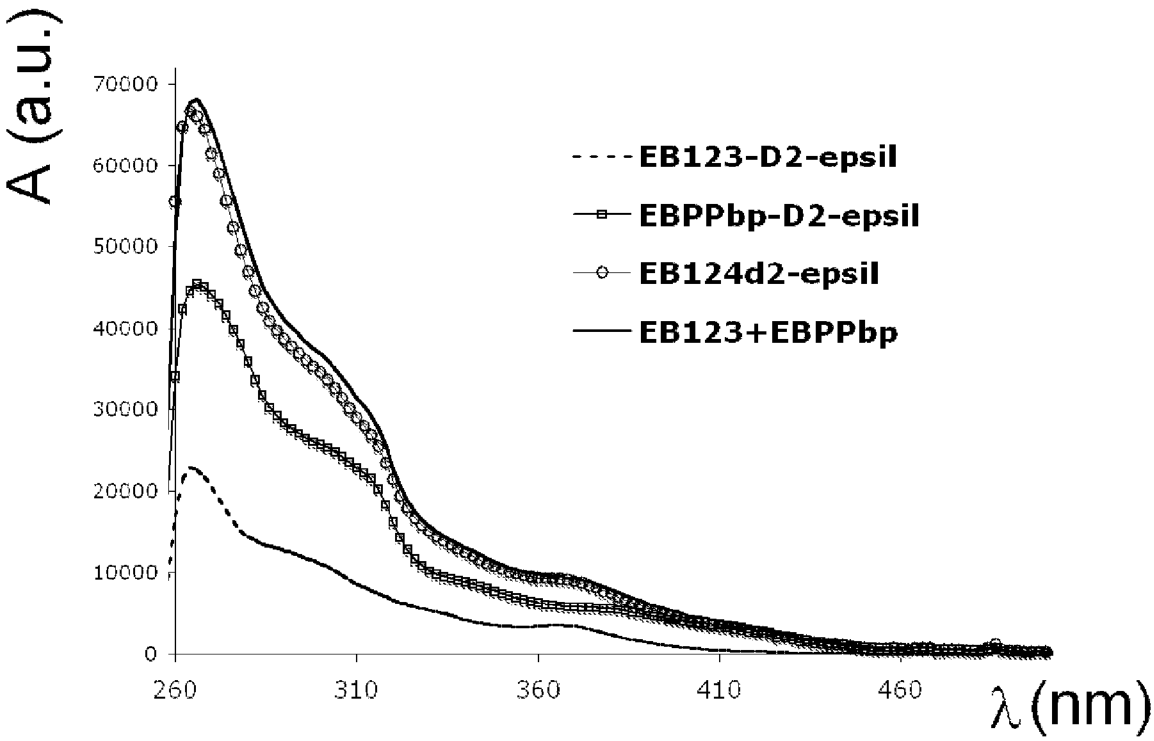
A (a.u.)
70000
60000
50000
40000
30000
20000
10000
0
260
310
360
410
460
λ (nm)
EB123-D2-epsil
EBPPbp-D2-epsil
EB124d2-epsil
EB123+EBPPbp

FIG. 1

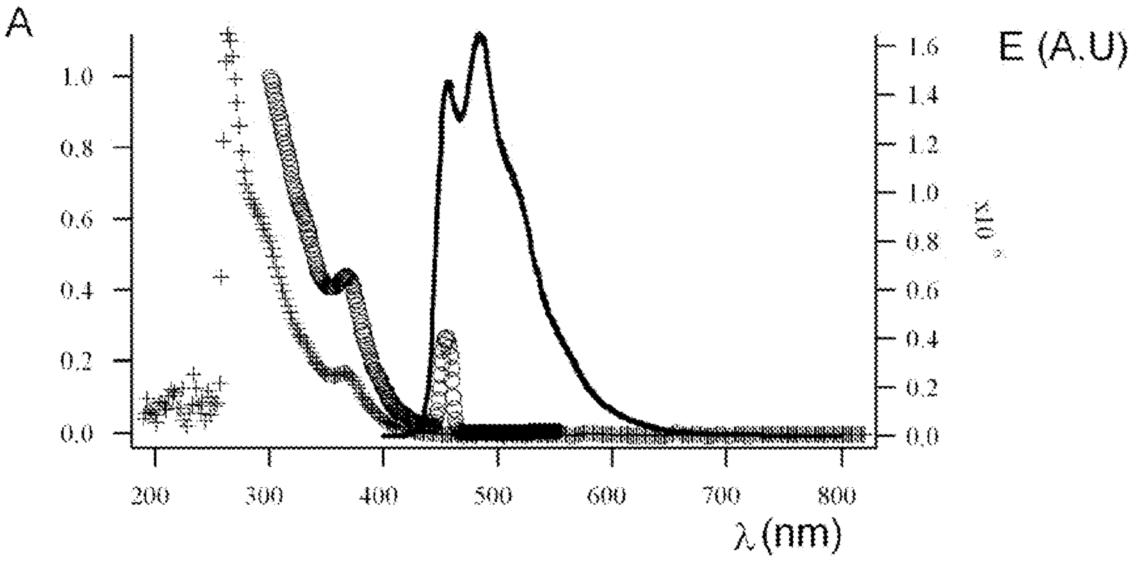
A
1.0
0.8
0.6
0.4
0.2
0.0
200
300
400
500
600
700
800
λ (nm)
E (A.U)
1.6
1.4
1.2
1.0
0.8
0.6
0.4
0.2
0.0
x10

FIG. 2

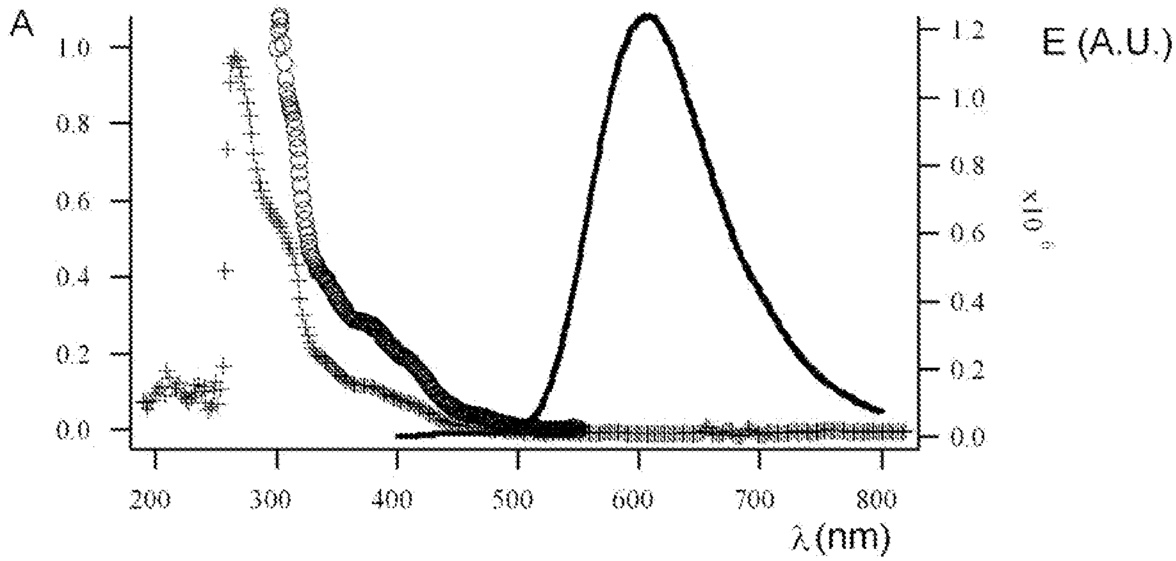
A
1.0
0.8
0.6
0.4
0.2
0.0
200
300
400
500
600
700
800
λ (nm)
1.2
1.0
0.8
0.6
0.4
0.2
0.0
x10^6
E (A.U.)

FIG. 3

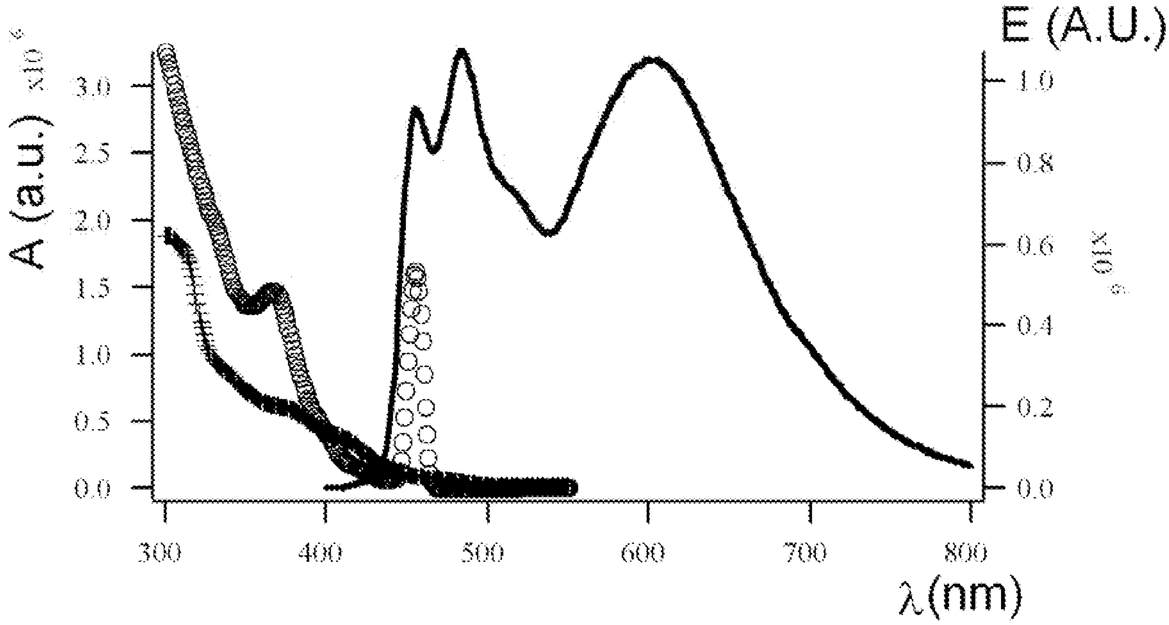
A (a.u.) x10^6
3.0
2.5
2.0
1.5
1.0
0.5
0.0
300
400
500
600
700
800
λ (nm)
E (A.U.)
1.0
0.8
0.6
0.4
0.2
0.0
x10^6

FIG. 4

Europäisches Patentamt
European Patent Office
Office européen des brevets

## PARTIAL EUROPEAN SEARCH REPORT

which under Rule 63 of the European Patent Convention shall be considered, for the purposes of subsequent proceedings, as the European search report

Application Number
EP 09 15 2301

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2007/004113 A (KONINKL PHILIPS ELECTRONICS NV [NL]; NAZEERUDDIN MOHAMMAD K [CH]; WEGH) 11 January 2007 (2007-01-11)<br>* the whole document *<br>----- | 10-15 | INV.<br>C09K11/06 |
| A | US 5 766 952 A (MANN KENT R [US] ET AL) 16 June 1998 (1998-06-16)<br>* the whole document *<br>----- | 10-15 | |
| A | IWAMURA, M., TSUKUDA, T., MORITA, M.: BULL. CHEM. SOC. JPN., vol. 80, no. 6, 2007, pages 1140-1147, XP002530542<br>* the whole document *<br>----- | 10-15 | |
| A | UDDIN, M.J., YOSHIMURA, A., OHNO, T.: BULL. CHEM. SOC. JPN., vol. 72, no. 5, 1999, pages 989-996, XP002530543<br>* the whole document *<br>----- | 10-15 | |

TECHNICAL FIELDS SEARCHED (IPC)

C09K

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

2

| Place of search | Date of completion of the search | Examiner |
|---|---|---|
| Munich | 4 June 2009 | Saldamli, Saltuk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04E07)

Europäisches Patentamt
European Patent Office
Office européen des brevets

## INCOMPLETE SEARCH SHEET C

Application Number
EP 09 15 2301

Claim(s) searched incompletely:
10-15

Claim(s) not searched:
1-9

Reason for the limitation of the search:

Two different sorts of objections are raised regarding Article 84 and 83 EPC:
(a) The present claims 1-9 relate to an extremely large number of possible compounds, and,
(b) The same claims define these coumpounds by means of a given desired property or effect (e.g. white light emitting, emission range between x nm -y nm, having CIE coordinates (x,y), etc.).
As to point (a), support and disclosure in the sense of Article 84 and 83 EPC is to be found for only a very small proportion of the compounds or group of compounds mentioned in claim 1, i.e. example EB124 on page 30-31.
As to point (b), the result-to-be-achieved type of definition does not allow the scope of the claim to be ascertained and thus imparts burden of undue experimentation on the skilled person.

Regarding these two major objections, the non-compliance with the substantive provisions is to such an extent, that a meaningful search of the whole claimed subject-matter of claims 1-9 could not be carried out (Rule 63 EPC and Guidelines B-VIII, 3).

The extent of the search was consequently limited to the supported parts of the subject matter of claim 10, and those parts of claim 11-15, which refer back to claim 10.

## ANNEX TO THE EUROPEAN SEARCH REPORT ON EUROPEAN PATENT APPLICATION NO. EP 09 15 2301

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2009

| Patent document cited in search report | Publication date | Patent family member(s) | Publication date |
|---|---|---|---|
| WO 2007004113 A | 11-01-2007 | CN 101238138 A | 06-08-2008 |
| | | EP 1904508 A2 | 02-04-2008 |
| | | EP 2036913 A2 | 18-03-2009 |
| | | EP 2036914 A1 | 18-03-2009 |
| | | EP 2036915 A1 | 18-03-2009 |
| | | JP 2009500316 T | 08-01-2009 |
| | | KR 20080030636 A | 04-04-2008 |
| US 5766952 A | 16-06-1998 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006024997 A


### Non-patent literature cited in the description


- **M. K. Nazeeruddin et al.** *J. Am. Chem. Soc.,* 2003, vol. 125, 8790
- **M. K. Nazeeruddin et al.** *Inorg. Chem.,* 2007, vol. 46, 5989